# EUROPEAN PATENT SPECIFICATION

(11) **EP 1 142 079 B1**
(45) Date of publication and mention of the grant of the patent: **19.03.2003**
(21) Application number: 98963269.0
(22) Date of filing: 17.12.1998
(51) Int. Cl.: H02J 1/14

(54) **POWER NODE CONTROL CENTER**
STROMVERTEILUNGSKNOTENKONTROLLVORRICHTUNG
CENTRE DE CONTROLE DE NOEUDS DE PUISSANCE

(43) Date of publication of application: 10.10.2001
(73) Proprietor: SPD TECHNOLOGIES INC., Philadelphia, PA 19116 (US)
(72) Inventor: YKEMA, John, I., Broomall, PA 19008 (US)
(74) Representative: Beissel, Jean
(86) International application number: US9827021
(87) International publication number: WO00036726

(56) References cited:
- EP-A- 0 594 200
- WO-A-97/14206
- WO-A-97/34452
- DE-A- 3 906 260
- US-A- 4 419 667
- US-A- 4 477 862
- US-A- 5 384 490
- US-A- 5 390 081
- US-A- 5 469 335
- US-A- 5 682 298

## Description

### Field of the Invention

This invention relates to power distribution systems and to methods and apparatus for controlling and protecting such power distribution systems, with emphasis on power distribution systems used in both military and commercial nautical applications and large land transportation vehicles.

### Description of Prior Art

Electrical power distribution systems normally include power sources and many loads, with loads connected to the sources by branches. Power from a source is frequently processed in some way, and possibly various ways, before it is provided to each of the various loads. The locations of circuit elements for processing power may be called "nodes".

Typically, nodes have been custom-tailored to fit a particular need of the electrical power distribution system at a particular location. One type of node is a power panel.

Power systems may generally be characterized as low voltage or high voltage power systems. For purposes herein low voltage power systems are considered to be power systems in which voltage is less than about 1,000 volts.

In low voltage power systems, nodes may vary in power capacity from less than 10 kilowatts to over 5 megawatts. Node functions vary from simple to very complex distribution. Automatic switching, frequency conversion, voltage conversion, power quality regulation, various types of system protection control and multiple operating control functions are just a few of the possibilities which may be used alone or combined for the requirements of a particular load.

Current practice in designing electrical power distribution systems is to identify functional and characteristic requirements for each node. Node functional requirements establish the kind, capacity and features of components and circuit elements, as well as the number of inputs and outputs to and from the node.

In current practice the designer identifies the type(s) of switching devices to be utilized at a node and the rating for each such device. The designer further identifies the type of control available to each node and whether such control should be automatic. Current practice is also for a power system designer to specify the type of protection, if any, to be provided at a given node.

In current practice it may be necessary to perform frequency and/or voltage conversion at nodes.

Typically, all of the equipment required to be present at a given node is not produced by a single component, making it necessary to secure various components used at a node from different manufacturers. Conventionally, a producer may acquire and assemble many of the components and much of the equipment for each node and must design and custom engineer each node and its components before a desired output can be produced. As a result, each node typically takes on its own identity and is not thereafter easily changed. The power distribution system which eventually results loses flexibility early in the design process. Since lead time for purchase of node equipment includes the time required to design or custom engineer certain equipment to facilitate the functions to be performed at the node, changes in load requirements often result in long delays in procurement.

Conventionally, a power system node may contain several distinct elements which are not preassembled. In such case, it is necessary to install individual components at the node, connect those components into circuits after installation and then test the installed, connected components for proper operation.

United States patent 4,477,862 discloses a vertically extending set of receptacles which are referred to therein as providing a backplane connector but are three dimensional and not at all planar in character, but which are adapted to matingly engage with adjacent connector assemblies to provide a plurality of adjacent interconnected input or output module receiving members, for vertically mechanically supporting modules from above and below. The modules are further vertically supported by module portions which extend through vertically elongated apertures formed in the walls of the three dimensional receptacle member.

WO 97/14206 discloses a modular power supply having schematically depicted input and output power buses and modules adapted for attachment to the buses. The modules utilize axially moveable elements which, when axially displaced by contact rods or pins, permit radially biased elements to contact the rod or pin thereby effectuating electrical contact. Depiction of the bus bars and connection thereto is schematic only.

U.S. patent 5,682,298 discloses a printed circuit board having a collection of pin receiving conventional connectors mounted thereon for connecting to a power supply and the like. Power output connectors are 21 and 24 are symmetrically located over the top of the power supply printed circuit board 20 to balance resistance between the power supply connector pins and the power distribution points. Planar segments of the board are divided into sections furnishing differing voltages. The printed circuit board may typically have a top layer, an intermediate layer having 5-volt and 12-volt sections, a ground plane layer and 3.3-volt layer.

U.S. patent 4,419,667 schematically discloses a system for controlling power distribution to customer loads having a master control station including a programmable micro-processor-based central controller in two-way communication with the plurality of units positioned at separate substations of an electric utility generating the system.

WO 97/34452 discloses a cabinet including a chassis for electronic equipment, namely data processing devices, where the cabinet has a parallelpiped-shaped metal frame from which units can be withdrawn. The chassis further includes at least two rectangular metal guide panels 20, 22 mounted in the frame parallel to a side of the frame at a distance corresponding to the height of withdrawable units designated 80. The guide panels 20, 22 take the form of grids 28 whose openings 32 are distributed over the surface of the guide panels 20, 22 in a predetermined grid pattern.

European patent application 0 594 200 A2 discloses a backplane wiring scheme for use in the hub of a packet data communications system with line cards being connected to the backplane wiring arrangement in the hub with each line card providing a coupling to a network segment, to a station or to a bridge to other stations or segments of the network. The connection is usually in either a ring or bus topology, allegedly resulting in increased flexibility, reduced power consumption and easier implementation. Mechanical connection of the line cards is only schematically depicted.

U.S. patent 5,384,490 discloses a power distribution and control system for computer modules providing for attachment to a computer cabinet frame acting as a heat sink and schematically depicting mechanical connection of the modules to the cabinet frame.

U.S. patent 5,390,081 discloses a fault tolerant power distribution system having a multi-layer backplane structure with the layers of the backplanes being joined at aligned perforations through the backplanes via respective conductive pins 50 as disclosed at column 4, lines 42 through 44. Each of the plate layers 40, 42, 44 has a specially patterned metalization layer with the metalization on each plate extending up to or into selected plate perforations. Moat 56 at specific perforations isolates pins 50, as required from the power source as a pin 50 passes through a plate 42 and a moat 56 at a perforation 48, as discussed at column 5, line 65 through 69.

U.S. patent 5,469,335 discloses a power distribution system and method for supplying power to printed circuit boards where the system includes a power distribution rod passing through one or more printed circuit boards and being resiliently received by conductive connectors providing a pathway between the rod and the conductive metal surface of the printed circuit boards of interest.

### Summary of the Invention

This invention embraces electrical power distribution systems having a plurality of branches for carrying power to loads. The branches are interconnected at nodes at which various functional equipment and circuits are located for monitoring, switching, protecting and/or converting power to a form needed for one or more particular loads. Other needed functions may be conveniently performed in the nodes near the respective loads.

In one of its aspects, this invention provides nodes which are modular in construction to facilitate accommodation of changes in load requirements and which may be easily upgraded in the event of load and system changes.

The nodes preferably include modules for performing functions such as switching, power conversion and/or power regulation. Each module preferably includes functional components and circuit elements needed to produce and/or control a predetermined output modified from the power supply and designed for its load. The modules may be enclosed in modular housings designed to fit together with other modules and with a backplane. The nodes are preferably provided by placing the functional components and circuitry within modules which conform to one another and preferably compactly nest together one against each other, with at least some of those modules being electrically connected to an essentially contiguous or adjoining backplane. The modules preferably mutually support each other in the node, preferably in part by having power interconnections to the backplane which are mechanically able to support the interconnected modules. The nodes may have incoming power modules which receive system power, modify that power in some way and provide the modified power as output to functional modules which, in turn, supply a load.

The modules may be made rectangular solid in shape to facilitate fitting of plural modules together to form a compact node.

Mutually conforming non-rectangular solid shapes capable of being fit together are also within the purview of the invention. In addition to providing a compact node, fitting the modules closely together adds overall mechanical support and thermal stability to the node structure, whether or not there is lateral or vertical interconnection between adjoining modules.

The modules are preferably of standard dimensions such that large modules have at least one dimension twice or some other even multiple of the corresponding dimension of a smaller module. The modules may be enclosed in housings for cleanliness or may have rigid frames enabling them to fit together, leaving open one or more faces. The components, circuit elements, conductors and connectors which are enclosed in the module, including any circuit boards and connectors that enable modules to be connected to one another preferably by self-contained connectors, may be supported directly on the module frame, enclosure or other specially provided support structure. In some instances support for at least of some module components may be only from the module connectors. Support is intended to keep the module structures free from mechanical obstruction which may effect operation, electrical short circuits, undesired magnetic effects and the like. The support may maintain a preferred operational orientation of a component in the design orientation of the module.

In yet another of its aspects, this invention provides a standardized backplane for each node to connect with at least one bus structure. Power is input to the bus structure. The backplane provides quick connection means for a variety of different types and sizes of modules configured with cooperating connectors to self-connect to the bus.

The backplane-contacting modules preferably connect together to define the modular power node control center. Each backplane-standardized bus structure preferably accommodates a variety of proportionally dimensioned modules, any one or more of which may be replaced by similar or different modules. One module may, for example, be replaced by two or more modules of smaller size. Outlines of suitable module positions may be displayed on the backplane connection surface to facilitate positioning and repositioning modules.

The backplane itself preferably has more than one input bus structure, for example AC and DC bus structures, in which case separate connectors are provided for the modules so that even the smallest size module in any of its positions has connections available. The backplane may provide an intermediate bus bar as well as an input bus bar. Instead of output of a module being fed to a load, it may be fed to an intermediate bus so that the modified form of power on that bus is provided to other modules or to loads, either directly or after further modification.

Alternatively, a backplane might include a plurality of additional bus bars for carrying modified electrical power supplied from other power sources.

The backplane may also provide outgoing terminals for conductors leading to loads. In at least one possible arrangement a self-engaging coupling to mate with modules like those connected to the various bus bars may extend to a different connector on the opposite side of the backplane from the modules to which the conductors leading to the load or to other modules may be connected.

A control module part of a node may include a central processing unit or other microprocessor which may be programmed to perform various control functions of other modules forming a part of the node. The control system incorporating such a central processor unit and sensing devices as required may be added to the node, at the node or remote from the node, connected to and treating each node to which it is connected separately. When present, such a control system monitors input power to the node and power of each output connection from the node, monitors the electrical system data of the node and commands at least one of the modular functional distribution devices. Such commands may disconnect a node output circuit from a load or may stop power flow to the connected output circuit.

The control system may utilize programmable means for performing such monitoring and commanding. Such a control module may also be connected to an overall electrical central control which, by input signal, may change the state of one or more of functional devices from a given state to an opposite state. A control system may also monitor the functional distribution devices and send a command to automatically alter the devices for self-correction, turning the device off or sending a warning signal to the central control system. Where a control system includes monitoring or sensing means, processing means process the sensed data according to a predetermined or adaptive algorithm and produce an output function which may command action, display information or record data.

The power node control center may perform many varied functions including, for example, switching, voltage conversion, frequency conversion and voltage regulation. Where the node includes a control system, it is particularly well suited to perform protection control functions such as over-current protection, ground current protection, over and under voltage protection, over and under frequency protection, differential current protection, phase current imbalance protection and open circuit protection. The control module performs one or more operating control functions including, but not limited to, state monitoring inputs and outputs, health monitoring of all functional power distribution devices, diagnostic monitoring of the control functions, communicating control information to a central control station or other power node control center(s), receiving and operating on information and commands from the central control station or other power node control centers, displaying information pertinent to the node, or to the system at the power node and/or at a central control center. In addition to displaying such control functions as may be desirable for proper operation of the power node control center or the system, the power node control center may be programmed to shut down adversely effected loads or to perform corrective action in components at appropriate modules in the node, or elsewhere in the system.

### Brief Description of the Drawings

Figure 1 is a schematic representation of a power distribution and delivery system including a plurality of power node control centers manifesting aspects of the invention.
Figure 2 is a front elevation in schematic form of a single power node control center with functional and control modules supported on a power backplane, exemplifying one possible configuration of power node control centers manifesting aspects of this invention.
Figure 3 is a rear elevation in schematic form of the power node control center depicted in Figure 2 connected to a power bus backplane.
Figure 4 is a side elevation in schematic form of the power node control center depicted Figures 2 and 3 taken looking from right to left in Figure 2, showing the power bus backplane.
Figure 5 is a rear elevation in schematic form of the power node control center depicted in Figures 2, 3 and 4, with the backplane shown in Figures 3 and 4 removed to illustrate points for connection of functional and control modules forming the power node control center with the backplane.
Figure 6 is an exploded isometric schematic view of a power node control center and backplane similar to those illustrated in Figures 2 through 5.
Figure 7a is a much enlarged sectional view through a single pair of engaged coupling members;
Figure 7b is a vertical elevation looking into the tulip connector;
Figure 8 is a schematic system drawing similar to Figure 1 but with the addition of representative control modules and connectors thereto.
Figure 9 is a front elevation view of an alternative construction of a power bus backplane;
Figure 10 is a schematic sectional view showing connections from each backplane bus of the power bus backplane of Figure 9, showing the connectors on the front and back of the structure and a module in position for coupling connectors at the front;
Figure 11 is a highly schematic diagrammatic representation of conductors connected to backplane buses and conductors extending through openings through the backplane bus of the type illustrated in Figures 9 and 10;
Figure 12 is a schematic perspective view similar to Figure 11 of a corner of the power bus backplane of Figures 9-11, but showing more of the structure with insulation in place and showing a section taken along a column of terminals;
Figure 13 is a schematic diagram similar to Figure 10 but showing a somewhat enlarged single module coupled to a portion of the power bus backplane;
Figure 14 is a diagrammatic view showing how a functional module can connect the power lines to the backplane and provide isolation of the backplane buses from feed back to the power lines;
Figure 15 is a schematic diagram showing how one phase of three phase AC taken from the backplane buses can be inverted by a functional module; and
Figure 16 shows how a DC load can be switched by a functional module, offering the possibility for DC regulation and DC conversion as well.

### Description of the Preferred Embodiments and Best Mode Known for Practicing the Invention

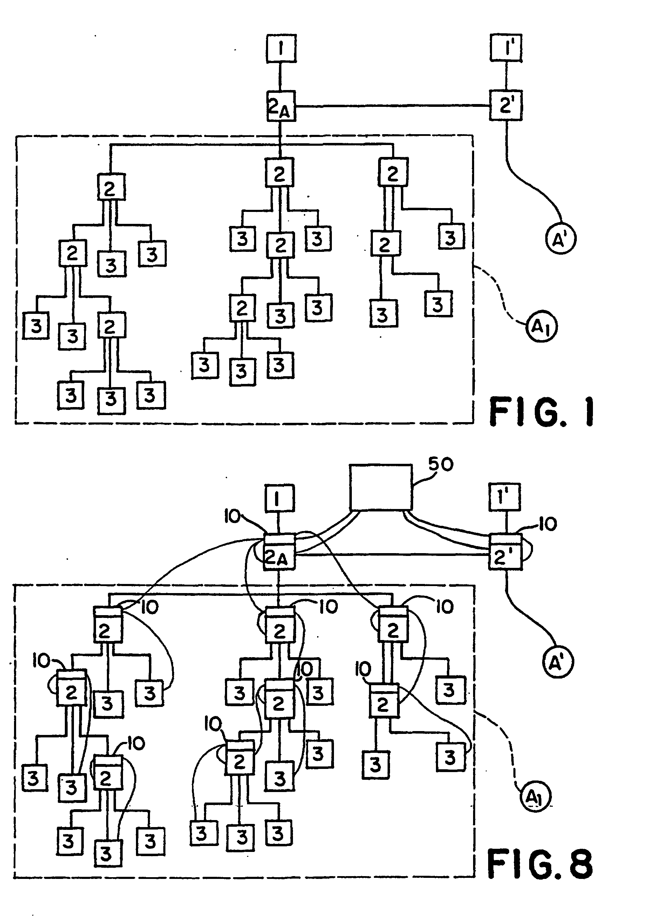

Referring to the drawings in general, and to Figure 1 in particular, there is depicted a power distribution system manifesting aspects of the invention. The power distribution system includes at least one power source 1 and a plurality of loads, each of which is designated generally 3. The loads 3 receive power supplied by power sources 1 and perform various functions. Intermediate the power source(s) and the loads are a plurality of power nodes, each of which has been designated generally 2. Conductive branches carry electrical power supplied by sources 1 to selected nodes 2 for distribution by other branches to selected loads 3 or to further nodes 2, which in turn may feed selected loads 3 or even further nodes 2 associated with additional loads 3, etc.

Rectangular dashed line A₁ in Figure 1 surrounds a plurality of nodes 2 and loads 3 fed primarily from one power source through a power node control center designated generally 2a and depicted schematically. The grouping of nodes 2 and loads 3 within rectangle A₁ may result from these nodes and loads having a common general location or a specialized function. Other groupings which can be expected in most systems are generally represented by a single grouping designated A¹, which will be in other locales of interest.

A' indicates schematically where a second group of nodes 2 and loads 3 may be connected to another control center 2' to receive power from another power source 1'. Other groups of nodes and loads and power sources may be added in many arrangements and are not necessarily limited to one power source per group, as is shown. The power sources may be networked together or directly through power node control centers 2_{A} and 2' as represented by showing power node control centers 2_{A} and 2' connected by branch 4. There may be parallel different power sources, such as an AC and a DC source, located at a common position. The branch lines illustrated may therefore be more than a pair of conductors. Sets of conductors for different kinds of power in different locations may be encountered within one group.

Single lines in Figure 1 indicate that there is electrical connection, or a fiber optic connection. In some cases the connection may be of a single type of power. If the power source is a DC source, two lines are required, particularly if a pair of bus bars for the DC are provided at each node. Single phase AC power at a particular voltage level also requires two conductors. If three phase AC is employed, three conductors are employed and a separate bus bar is used for each phase.

A power source may be a single source of power or it may be separate sources of power providing AC and DC with separate appropriate output conductors, probably a minimum of four, or five if the AC is three phase. An alternative possibility is that, if only AC is generated at the power source, an AC to DC converter is supplied at the control center 2_{A} to produce DC power with output branches representing both AC and DC conductors.

Some of the power node control centers 2_{A} and 2' have branch connections provided to the others, just as connection of the generated power from power source 1 is supplied to a network including the other power generators.

Power node control centers may actually provide more than one type of power; additional forms of power and levels of voltage may be provided at the power node control centers within the various groups according to the need of the loads they supply. Thus, one function of a power node control center may be to convert from one form of power to another. The individual modules of a selected power node control center may provide a converter such as a full wave rectifier with a smoothing circuit to obtain a DC output for selected loads from a single phase or three phase AC supply. AC may have its voltage changed by a transformer module or voltage limiting circuit, which might reduce voltage to a DC conversion module. Likewise, power frequency conversion can be accomplished in a frequency conversion module portion of a power node control center.

The power node control center depicted generally as 2a is of modular construction for use in the electrical power distribution system illustrated in Figure 1. Power bus backplane 8 portion of the power distribution system has a plurality of preferably substantially co-planar bus bars for carrying electrical power. A plurality of the functional module 6 are each preferably contained in a parallelepiped-shaped housing adapted for complementally contacting fitting with other ones of the functional modules and with a backplane.

At least some of the functional modules include at least one of rectifying means, switching means, voltage conversion means, voltage regulation means, pulse and other wave form generation means, voltage transformation means and/or power sensing and limiting means.

A power node control center preferably further comprises a control module 10 contained in a parallelepiped-shaped housing adapted for complementally contacting fitting with at least one of the functional modules and with the backplane. The control module preferably further comprises programmable microprocessor means for controlling operation of at least one of the functional modules according to pre-selected instructions and operating and performance criteria including at least one of voltage and current limits, voltage polarity, surge criteria, temperature limits, humidity limits, shock limits and alternating current phase parameters.

The power node control center further preferably includes plug-compatible tulip and pin connecting means where the tulip is designated generally 52 and the pin is designated generally 54, on the backplane 8 and at least one of functional modules 6 respectively, for electrically connecting a selected functional module 6 to bus bars of backplane 8.

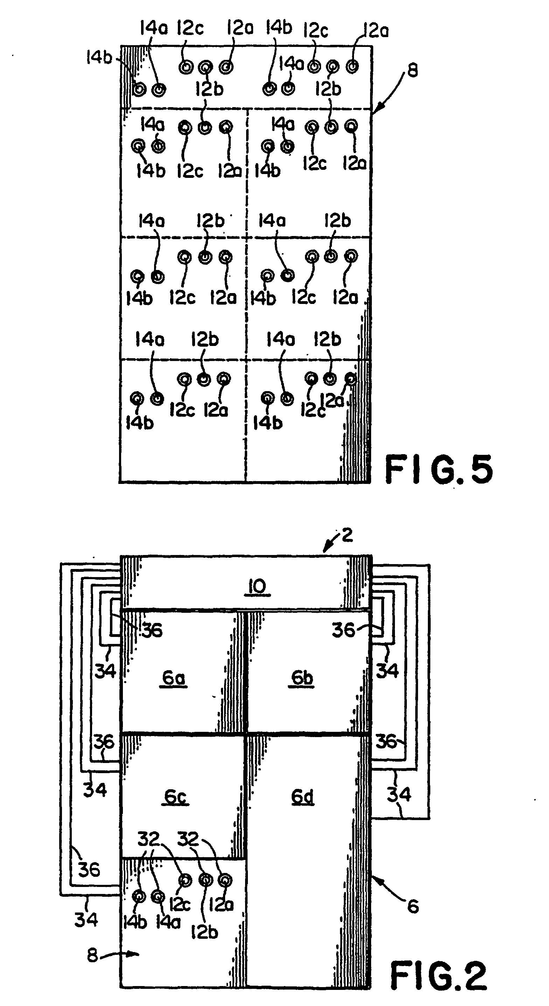

A modularly constructed version of a power node control center such as that designated 2a in Figure 1 is illustrated in Figures 2, 3 and 4 showing front, back and side views of the same power node control center. Power node control center 2a is preferably electrically connected to three bus bars, each of which is designated generally 16. In the case of three phase AC power, the bus bar for each phase is preferably connected to a separate power line carrying the designated phase. The power node control center has a configuration of functional modules 6 cooperating with a power backplane 8. In this embodiment the power node control center 2a has four functional modules 6a, 6b, 6c and 6d clustered together. Conforming sides of the functional modules 6a, 6b, 6c and 6d allow the modules to nest together complementally providing mutual support for one another. Major mechanical support also comes from backplane 8 and specifically the connectors 12a, 12b and 12c and 14a and 14b, which are preferably repeated in the same relative positions and orientation for other modules and positions.

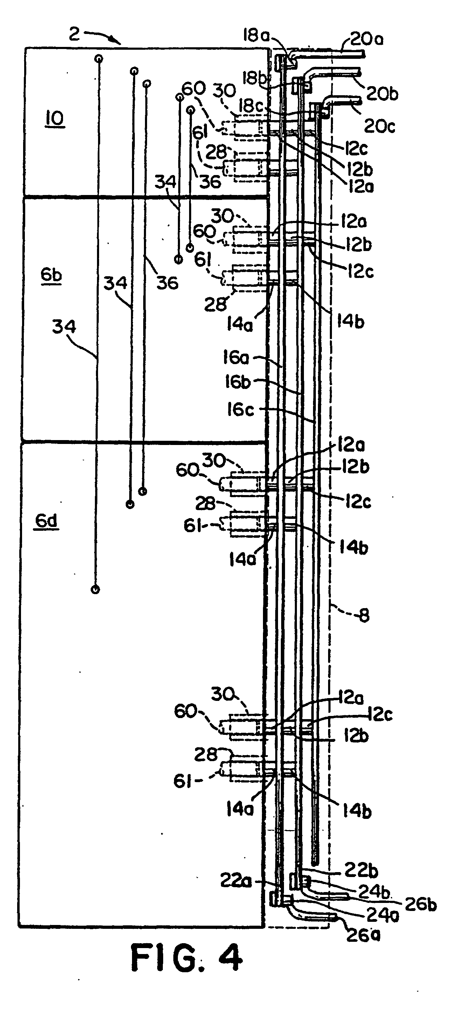

Backplane 8 preferably includes AC bus bars 16a, 16b and 16c respectively carrying A, B and C phases of three phase AC current. since bus bars 16 run vertically and in the preferred embodiment illustrated there are two columnar functional module positions, bus bars 16 of the same phase are repeated in respective columns tied together by tying bus crossbars T16a, T16b and T16c. To prevent shorting, the bus and tie bars of each phase are positioned in different planes as illustrated in Figure 4. Alternatively, the AC bus bars might be placed in the same plane and tie bars T16a, T16b and T16c looped over or under bars of other phases. Power input connections are preferably made at the end of the backplane 8 to the connection bars 16a, 16b and 16c respectively by connectors 18a, 18b and 18c and cables 20a, 20b and 20c.

Backplane 8 also preferably contains DC bus bars 22a and 22b, preferably repeated in two columns. DC bus bars 22a, 22b carry connectors 14a and 14b repeated at the same relative positions for each minimum sized functional module position. DC bus bars 22a, 22b are connected together by connecting tie bars T22a and T22b, at the opposite end of the backplane from AC tie bars T16a, T16b and T16c and preferably located in different planes to avoid shorting. Tie bars T22a, T22a conveniently provide connectors 24a and 24b for DC input cables 26a and 26b. A ring connector at the end of each cable is conductively held in place by a nut on a threaded terminal pin.

All of the input cables, both AC and DC, represent a single branch in Figure 1. All of the input cables may be bundled together; alternatively, AC and DC cables may be separately bundled.

To provide proper support for individual modules through pins 12 and 14, the pins solidly connect to the associated bus bars which are constructed to be sturdy in order to bear applied loads. One preferable means of adequately supporting the bus bars relative to one another and properly spacing and insulating them from one another is to use an insulating potting compound, such as an epoxy resin or bakalite type resin, to give rigid support.

The bus bars when fully assembled are placed in a mold in proper relative position. A melted resin is poured into the mold and allowed to harden before the backplane is removed as a unit. Preferably insulating material covers all of the bus bars including 16a and 22b and leaves only the connectors 12a, 12b, 12c, 14a and 14b projecting beyond the insulating surface.

The bars may alternatively be mechanically supported by a non-potted insulating structure.

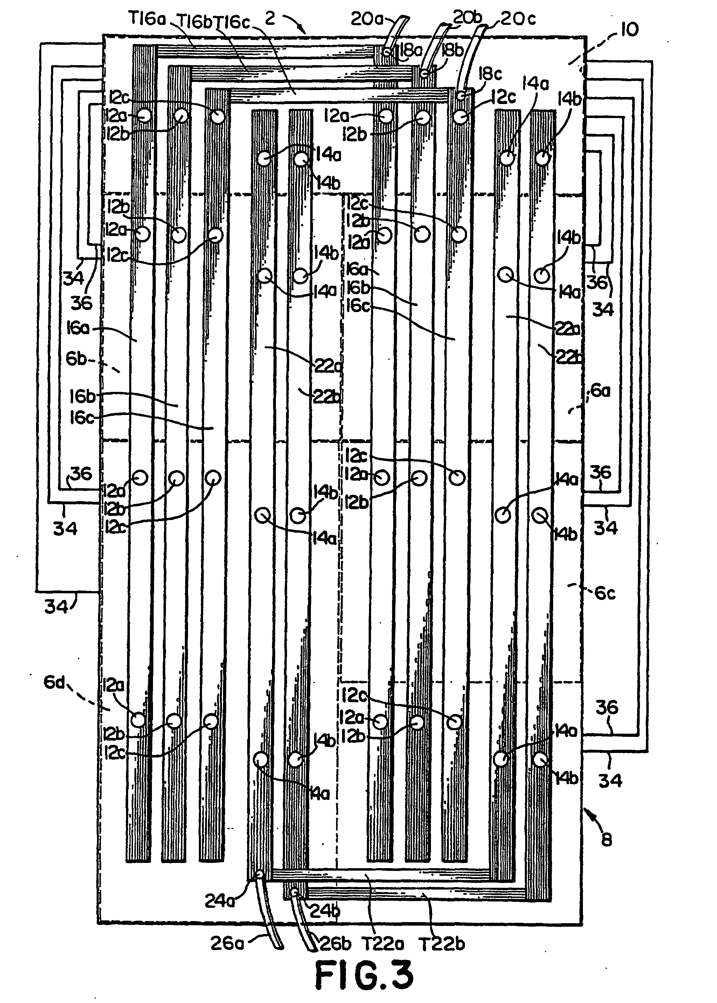

Figures 3 and 4 illustrate the backplane structure with mechanical support omitted. As seen in Figure 3, the support stem portions of the tulip connectors 12a, 12b, 12c and 14a and 14b are visible because they protrude through the backside of the bus bars; the flower parts of the tulip connector parts are not visible. The cylindrical pin stem portions are press fit, soldered or welded into conforming cylindrical holes in the bus bars. Therefore, it is the receiving ends of the tulip connectors that are seen in Figure 3 rather than the ends which project toward and cooperate with the functional modules 6 or control modules 10.

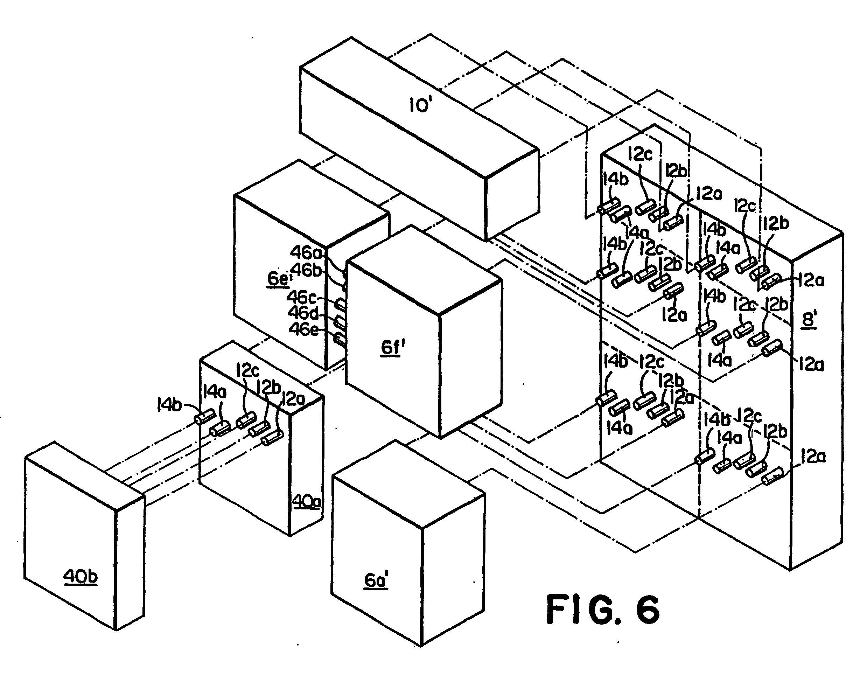

Figure 5 shows the connectors on the surfaces of the modules which face backplane 8.

The functional modules and the control module are preferably provided with pin connectors 60 to self-engage pin- receiving tulip connectors 52.

In some cases, a module 6 and/or 10 may require only AC or only DC power. In such case not all connectors will provide electrical connection to that module. On the other hand, since connection of pins 60 with tulips 52 provides not only electrical connection but also mechanical support for modules 6 and/or 10, even where an active circuit is not connected it may be desirable to provide pin and tulip connector means or other types of connection means rigidly fixed to the module and capable of providing added mechanical support.

Where the alternating current provided is three phase and only a single phase is required, only two of the three conductors need be used for electrical connection; the remaining connectors are preferably used with their peripheries insulated to prevent short circuits and to provide added mechanical support.

A given module 6 and/or 10 may require all the types of power supplied by backplane 8.

If the module housing is a rigid structure and non-conductive at least in the area of the electrical terminals, the pin connector or some other type of terminal may be supported directly on the housing walls or a frame within the housing. Alternatively, pin connectors 60 may be mechanically connected to a component to which they are also electrically connected where power from those terminals is required. In such case the component supports the housing or may be connected to a frame or a wall supporting the housing. Examples of modules not needing electrical connectors in locations where they are not used for electrical connection are functional module 6d and control module 10 illustrated in Figures 2 through 6. Similar mechanical connectors, possibly of made non-conductive materials, are preferably provided on such modules in the non-electrically connecting positions for added mechanical support. As seen in Figures 2 and 4, module 6d is twice the height of the other modules.

In order to standardize backplane 8, functional modules 6 preferably only have integer multiples of the dimensions of the smallest permissible module at backplane 8. Module 6d may not require electrical connection except in one configuration, and possibly to only one set of connectors therein. Since connectors are provided in each minimum module position on the backplane, these extra connectors provide added mechanical support by providing extra non-conducting pins at corresponding locations not needed for electrical connection for the larger module. Having the connectors in place is desirable to facilitate accommodation of standardized modules and interchangbility of sizes through minimum size modules. Connection to both sets of connectors, 12a, 12b, 12c and 14a and 14b in each configuration using non-conducting pins in connection positions not needed for electrical connection of the module also provides added mechanical support.

As seen at the lower left of Figure 2, at a given power node control center one or more modular positions may be unoccupied. In such event, pins 12a, 12b, 12c and 14a and 14b at that position are exposed. The pins may be provided with insulated sleeves to prevent electrical shock and short circuiting. The pins providing power to a module are electrically conductive material to make good electrical contact between the pin and the circuitry within the module.

Figures 2, 3 and 4 show three AC bus bars and two DC bus bars preferably receiving power from a power source directly, or from a functional module. If the backplane 8 is standard and not to be changed, there is advantage to having backplane 8 fixed with active self-connectors in the standard positions corresponding to each module position. There are instances in which bus bars may need to be modified in various ways. For example, in some cases the parallel sets of bus bars may not be interconnected; each set may be capable of carrying different types or levels of power. What is shown as a single bus bar may be divided into two or more for various purposes.

The advantage of structure in which the connections are plug-in or quick-connect and of standard position on both the backplane and modules is significant. With such connections position and alignment of the modules relative to one another is automatically determined. To facilitate placing the modules in proper location it is an advantage to have minimum size module positions outlined on the backplane 8 by solid or dashed lines.

The modules may have lateral connections which are also preferably plugged in or quick connecting as shown in Figure 6 as between functional modules 6e and 6f. It might be that in a given instance, a power source would produce only one type of power, for example three phase AC power. In such event, at node 2a it might be desirable to convert AC to DC using a functional module containing a full wave rectifier and smoothing circuit. If the power node control center of Figures 2, 3 and 4 were involved, three phase AC power could be received in module 6a of Figures 2, 3 and 4 with that module containing full wave rectifier and smoothing circuits to provide DC power of a particular voltage level. The DC output might be either fed directly back to the DC bus bar or it might go for processing to functional module 6b for functions such as voltage regulation.

Alternatively, as seen in Figure 6, lateral interconnection between functional modules 6e and 6f permits DC generated in module 6e to be fed to module 6f for use in producing a square wave or other non-DC power, to be fed back to the second set of bus bars to make that kind of power available for other modules within the node and/or to be passed on to other nodes.

Figure 6 shows, in exploded perspective partially broken away but without showing internal detail of the modules, a slightly modified arrangement of power bus backplane 8', modules 6a, 6e and 6f, differently configured functional modules 40a and 40b and a control module 10'. The drawing shows, where possible, sets of connectors 12a, 12b, 12c and 14a and 14b in position to cooperate with functional modules 6a, 6e and 6f shown as minimum space modules. Pin connectors 12a, 12b and 12c, and 14a and 14b on the respective sets of three and two bus bars, occupy their positions so that the minimum space modules 6a, 6e and 6f fit precisely in place with the self-connecting terminals, which are not shown, included in the modules. The modules 6a, 6e and 6f and their connections to backplane 8 remain essentially the same. Modules 6a, 6e and 6f can be shifted around to provide the functional output desired to a given load. Of course, control module 10' cooperates with individual modules 6a, 6e and 6f and can be modified to control additional and/or different modules.

Module 6e is different from module 6a in that the module 6e provides self-connecting laterally directed pins 46a, 46b, 46c and 48a and 48b, similar to those of the backplane 8', for electrical connection as required and for mechanical support otherwise. The connections effectively provide output from module 6e to module 6f. These modules are connected together first before they are assembled to the back plane 8'.

An example of the function involved is a pulse generating unit in module 6e which generates a pulsed power output which might be placed on two bus bars through connectors 48a and 48b and their associated tulip connectors in module 6f. The connectors in module 6f are connected between a circuit to do pulse forming or limiting or some other function useful in that type of power. The modified power then is input back into the backplane by module 6f.

A protection and/or operating control module 10 or 10' is not necessarily included in every node. However, in many cases it is highly desirable to have protection and operating control module 10 right at the node. Such a module 10 normally receives its power from backplane 8. The node, of which it is a part, can also be interconnected with other nodes and/or with a central control center. Although control may not require a computer for each function, for many purposes the computer function is quite important. Although some of the functions may be done by non-computer controlled equipment, very often the same functions can be performed more efficiently and more compactly by the computer. Because of their small size, there may be separate chips and/or computer circuit boards for different functions within the same control module. Control and protection modules preferably permit interchange of circuit boards to change the nature of control and protect a functional module for example, or to appropriately control and/or protect newly substituted modules.

In addition to providing for change of the circuit boards, the control and protection module 10 or 10', while receiving power as needed for operation from backplane 8 through pin connections like those used for functional modules, connects to the functional modules normally via low current electronic connections which may be accomplished by jumper connections plugging into jack-like connections. As seen in Figure 4, some of such of such functions may be one-way and may only require a single jumper connection 34; most will require bi-directional jumpers 34 and 36 to perform sensing and correction. Some modules may even require two or more sets for different types of sensing elements and correction signals.

The control systems included within the protection and/or operating control module 10 serve to monitor input power to the power node control center and output power of each output connection from the power node control center. They further preferably intelligently command at least one functional distribution device to disconnect the node output circuit or to stop power flow to the connected output circuit if an undesirable condition is detected on the output circuit. In some instances a module whose output is monitored may have components capable of correcting the output in accordance with instructions from the control module in response to sensed information at the output or elsewhere in the functional component. One or more outputs from sensors within the functional module are provided from the various modules by electrical conductive or fiber optical connections or the like and may be bundled within harnesses with other conductors connected to the same functional modules. Such multiple conductor connections may use individual jacks or multiple connections at the control and function modules to keep the node less cluttered.

Many power distribution nodes of the invention preferably also include a control module 10, as illustrated schematically in Figures 2, 3 and 4. In the overall system some nodes may not need control modules.

Use of a power node control center lowers equipment and construction costs for multi-purpose uses on ships and used in other environments. The power node control center streamlines the power delivery system by combining functional modules to perform all of the functions required or desired at each node of the power delivery system.

Modules 6 can be standardized not only as to size and shape of the module packages but as to uniformity of position and types of connecting points.

Such standardization reduces the number of functional modules 6 that will need to be stocked, tested and ready for immediate use for substitution or for replacement. All modules 6 can be factory-built and factory-tested ready for use in a standard node configuration. New nodes can easily be added as needed as well to accommodate new loads. Similarly, power sources and associated control centers can be added. Thus, the invention enhances the function of a power delivery system by assuring availability of the means to provide quality electric power to a large variable number of loads in the most efficient possible manner in a very short time with a minimum of disruption.

The power node control center of the invention provides for integration of power, protection, and functional control features within the node. Nodes with power modifying functions are accommodated with capacity to feed the modified power back into bus bars in the backplane, all in pre-packaged modular form. By providing functional modules packaged in affordable, standardized, scalable, easily operable and interconnectable modular upgradable structures, nodes may be placed near loads even in heavily used work areas to permit changes with a minimum of disruption of power service at the heart of a power delivery system. A great advantage to the system designer results from the open architecture of the power node control center power distribution backplane 8 with standardized power modules and programmable protection/control sub-systems utilizing microprocessors and software-driven peripheral elements to perform the control and monitoring functions, preferably close to each affected load.

The power node control center establishes a standardized family line which can be readily reconfigured to accommodate varying numbers of inputs and outputs along with a variety of power protection and control functions. Architecture of the power backplane, which itself may be made reconfigurable, provision of standardized functional power modules and creation of intelligent and programmable protection and operating control subsystems for any functional module, as embodied in the protection and operating control module, all lead to high efficiency and low cost for the power node control center. As a result multi-node power distribution systems can be fabricated using only power cables and standardized power node control centers, as illustrated in Figures 2 to 6.

Functional modules 6 may vary a great deal from one another. Figure 5 shows an incoming module, which should become one of the more common modules in that the power from the source enters module 6e from backplane 8. Module 6e may be a regulated switching circuit, which may be opened or closed at an instant in time. The rate of switching is regulated by control module 10, using a sensed pulse frequency signal to regulate pulse width and interval in accordance with preset circuitry controls to adjust those parameters from a local control panel or from a central control panel, by adjusting circuitry in module 6e. The circuitry may be a switching circuit which acts in the open position to preclude power flow into module 6e, whereas in the closed switch position power flows into module 6e. Pulse amplitude may be sensed and adjusted to a fixed level at which it is maintained. The control circuit board or amplitude may be adjusted by controls at a panel board and circuitry at the modules used to regulate pulse amplitude.

Module 6f has a lateral panel carrying connectors which cooperate with pins 46a, 46b and/or 46c and with pins 48a and 48b. Having adjacent module side panels with a full set of connectors serves the same functions as with connection to the backplane.
Standardization allows electrical connection by means of whichever available connectors are needed. Of course, it is possible to use modules with fewer standard connectors to supply just those needed for electrical connection. Module 6f may even be a dummy module just to allow connections most likely back to bus bar connectors 14a and 14b, since only two bus bars are needed.

Instead of using module 6f as a dummy for convenience in connection, it may divide functions if AC is employed. Under such circumstances, module 6e could be used to switch and module 6f to limit pulse amplitude to create a square wave applied through pins 14a and 14b to two bars 22a and 22b. Thus, module 6e may serve as an "output" module from, and module 6f as an "input" module to, power bus backplane 8'.

The power bus backplane 8', can be monitored so that the control module 10 might control function modules 6 in one of the following ways:
a) transfer switching where two incoming sources are available and it is desired to select from either source with the ability to transfer to the alternate source, for example, should the voltage level of the primary source fall below a prescribed level;
b) inverting/switching to convert the frequency of voltage so that the output frequency provided on the bus structure is different from incoming line frequency;
c) voltage transforming/switching to convert voltage such that the voltage level on the bus structure is different from voltage level on the incoming line; or
d) any combination of these functions or other functions.

Under at least some of these situations power may be brought into the bars through a functional module rather than direct connection as shown in order to first perform the functions described. Similarly, other output power modules such as 6a perform various power functions, such as load switching, overload switching, switching for motor starting, frequency conversion, voltage transforming, or a combination of these functions depending on the needs of the load being supplied by the output circuits. As illustrated, these modules are preferably connected to and receive power energy from the power bus backplane 8'.

Central power node 2' may include an operator programmable protection and operating control module 10 in which programming may be done at the module, at the node or remotely.

In the protection function, module 10' may monitor the power system for anomalies and then instruct a functional module or modules 6 to take appropriate action to restore the power system to normal condition. The protection function preferably includes sensors which monitor various parameters of the power system within the node. The parameters may be current, voltage, frequency, temperature and/or vibration. The sensors preferably are incorporated within the functional module 6 or within the power bus backplane 8. The type of protection strategy employed depends on the power system, but may include current overload, power overload, power direction, phase current imbalance, differential current, over-voltage, under-voltage, over-frequency. According to the protection strategy, protection control module 10 issues appropriate instructions to one or more of the function modules 6 and/or to another power node control center, such as 2A or 2' in Figure 1, or a central control station if the threshold level of any protection characteristic were exceeded.

In the operating control function, which is also performed by control module 10 or 10', preferably control module 10 or 10' monitors the system to assure that the power system is supplying the correct type of power to the loads selected by the operator. In performing the operating control function module 10 or 10' also preferably senses the power system parameters at the bus bar in the backplane 8 or 8'. The sensors are the same ones used for protection control plus others which sense the state of the functional modules, for example whether they are open (non-conducting) or closed (conducting). Control modules 10 or 10' also monitor the physical state of the node, that is whether functional modules 6 are connected to the power bus backplane 8 or 8' or are not effectively connected, as when only partially inserted into the connection but remain in a disconnected position. In performing the operating control function, module 10 or 10' may preferably be provided with a human interface to receive initial settings and operator instructions regarding the behavior or state of one of the functional modules 6 where needed. The operator could, through such operating control, instruct a control circuit breaker in a functional module 6 to close or begin conducting.

Operating control at each control module 10 may also monitor and act upon or gather and store data regarding the condition of the power system at the node.

The power bus backplane 8 or 8' preferably is a bus structure constructed preferably of either copper or aluminum bus bars which may have several different configurations, e.g. rectangular bars, round tubes, round rods, channels, or triangular shaped bus. The power bus backplane 8 or 8' preferably is so-arranged that the functional modules connect directly to the power bus backplane. This bus structure contains connectors as shown whereby the connected modules "automatically" self-attach, and may even literally snap on to the power bus backplane in quick connect/disconnect fashion.

The backplane 8' may also connect to a submodule 40a to create a low power bus backplane in module 40a in order to supply low power to submodule 40b. Low power module 40b may have a variety of functions but operates at lower power. In this example the functional modules 40a and 40b are each half the thickness of a conventional module, as illustrated in Figure 6.

The functional modules 6 which connect to the backplane 8 or to one another are commonly conventional electro-mechanical devices constructed to perform some conventional intended function. Some functional modules 6 may be switching modules, using conventional electro-mechanical switching devices with electrical contacts opened or closed manually, by mechanical mechanisms, or by electronic switching devices or other means, such as conducting polymers, or a combination thereof. As new affordable technologies become available for switching, they can also be accommodated. The switching devices are rated according to power capability, voltage and frequency as well as function. Switching devices, for example, cover no-load breaker disconnect, load breaker disconnects, fault current breaker disconnects, and transfer switch functions.

Power conversion modules preferably are power electronics for frequency conversion, commonly referred to as rectifiers or inverters, and magnetics for voltage conversion, commonly referred to as transformers. Power conversion modules are preferably constructed to fit into the same enclosures opening as power switching modules, thus allowing flexibility of function for the power node control center. Power conversion modules are preferably made in various power ratings according to voltage input/output and according to frequency input/output.

The control module 10 may include its own internal backplane to which various circuit boards or cards are inserted. Each circuit card preferably performs a control function, either protection or operating control. There are preferably a number of circuit cards for protection control, each of which coordinates functional modules having characteristics to accomplish control such as current overload, differential current, out of phase current, ground current, over/under voltage, over/under frequency, temperature or any other parameter found to be necessary for proper protection of the electrical system. These may be separate circuit cards, or one circuit card can process a multitude of functions.

Similarly, the operating control function is preferably on various circuit cards which are also inserted into the internal control backplane of control module 10 or 10'. These operating control circuit cards preferably perform the various control functions associated with the electrical system control and with equipment diagnostic control. There are preferably also circuit cards which control the communications with other power node control centers 2 and with the central power system control. The control function thus incorporates data processing and data storage capabilities. It also may have provisions for display or be connected to a separate display. These circuit cards may operate for analog and digital processing control.

The data sensing is preferably done via sensors located within the power modules or located within the load equipment being supplied from the power node control center 2. Data from different environments can also be obtained. All the sensors are preferably connected to the control backplane and their data are available to the circuit cards for processing, as each is instructed according to the demands of the operator or system designer. The sensors can be magnetic sensing devices, shunt devices, capacitor devices, fiber optic devices or any other type of sensor suitable for the application.

The power node control center 2 may be enclosed in a metal or plastic enclosure. There are different frames, that is, vertical sections, with each standard vertical section being capable of accepting or housing the proper vertical backplane that support the power modules for a particular power level. There are vertical frames rated for various power levels according to frequency and voltage and type of systems i.e. single phase or three phase. A family of frames are constructed according to power ratings. Frames may then be combined to form the desired power node control center for the electrical system application.

The frames, power modules and control modules are preferably standardized such that each is assigned a set of catalog numbers. This permits ordering a power node control center via a catalog number.

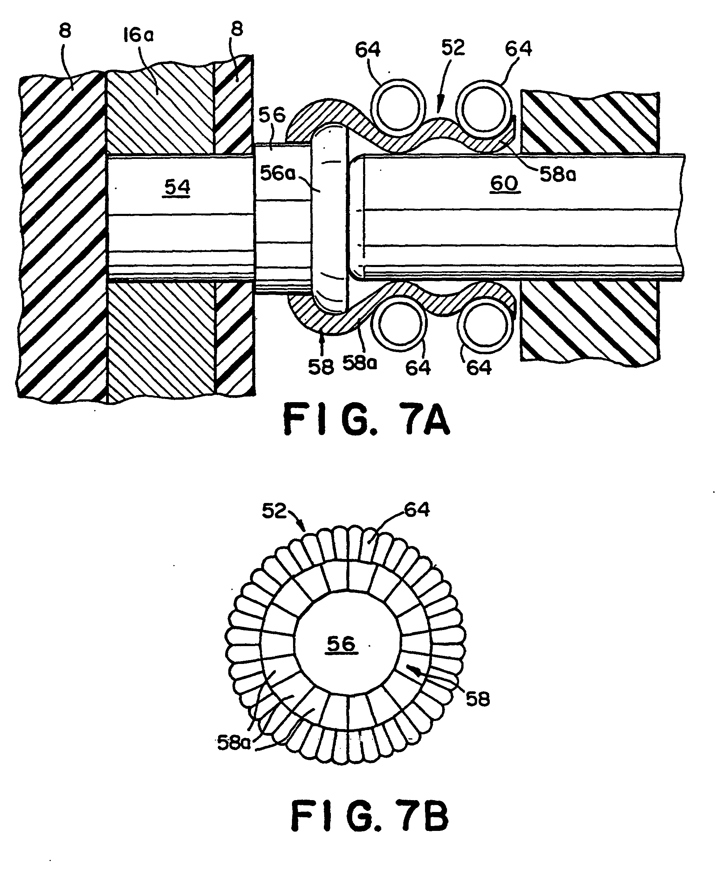

Functional modules 6a, 6b, 6c, 6d and control module 10 are inventoried items. The quick connect/disconnect feature between the modules 6 and/or 10 and the power bus backplane 8 permits rapid replacement of any of modules 6 and/or 10 upon failure thereof. A single enlarged coupling is seen in Figures 7a and 7b and intended to represent a preferred coupling. The backplane bus bars are provided with tulip connector couplings generally designated 52 which automatically engage and retain pins 54 on a module as the module is pushed against backplane 8 with the module pins 54 in proper alignment with associated tulip connector 52. The tulip connector 52 when pushed over a pin 54 mechanically engages and makes good electrical contact with pin 54 and hence makes good electrical connection with the supporting bar to which the tulip connector 52 is electrically and mechanically a part.

If the power bus backplane is attached to self-supporting structure such as a bulkhead on a ship, the power bus backplane in turn mechanically supports as well as electrically connects each control and/or functional module having such self-engaging contacts.

Each module in turn provides generally rigid mechanical support for tulip connectors 52 and hence is mechanically supported by backplane 8.

The modules engage the backplane and are supported thereby. By their conforming sidewalls engaging with and nesting with adjacent modules, further rigidity and support is added to the whole power node control center structure. The rigidity and nesting of modules in conformity with the faces of adjacent modules provides support for the whole power node control center, even if some modules are not connected to the backplane, provided those modules are positioned for support by, and perhaps connected with, adjoining modules.

Figure 7a is an enlargement of an engaged tulip connector-pin combination. Figure 7b is a view into tulip connector 54 from the open end. The self-engaging, self-releasing connector structure includes a generally cylindrical pin 54 preferably press fitted into a hole in bus bar 16. An intermediate mount 56 which of generally ring-like configuration is fixedly secured, typically by welding, to the end of cylindrical pin 54. The intermediate mount 56 includes a cylindrical collar-like portion to which pin 54 is secured and an enlarged annular lip portion 56a which extends radially outwardly beyond the periphery of the cylindrical portion as illustrated in Figure 7a.

The tulip connector further includes individual petals 58 which are retained in position by annularly configured coil spring 64. Force provided by coil spring 64 urges petals 58 radially inwardly until those petals contact one another on lateral edges thereof as illustrated generally in Figure 7b; such contact prevents the petals from collapsing inwardly and causes the petals to remain in a configuration such that an open center is provided into which a pin 60 may be inserted.

The cylindrical base 56b of the connector receptacle receives a larger diameter portion of sleeve 58 than the rest of the sleeve, which larger diameter portion may be but is not necessarily fixed as by welding, soldering or otherwise fixed in place to the base. The open end of the tulip flares outward and increases in diameter toward the lip.

The resulting large diameter opening allows the pin 60 to enter easily into tulip 58. The tulip is preferably constricted at two axial positions by annularly configured coil springs 64 which urge the tulip leaves radially inwardly toward the axis, to a diameter smaller than cylindrical pin 60. When cylindrical pin 60 engages tulip petals 58, the petals expand against the force of springs 64, and springs 64 hold petals 58 in good conductive contact with pin 60.

Force exerted by springs 64 firmly engages the tulip 52 with pin 60 so that in addition to good electrical contact, good mechanical support is provided.

A module base ultimately supports the circuitry and components and the module housing. The housing must be supported on the component structure or supporting frame work and must provide outwardly flaring openings to allow each of the conductive tulips 52 access to freely slide over its mating pin 60. Since multiple contacts are required, the module housing must also pattern the positions of tulip connectors 52 to correspond to pin 60 positions on the module of interest. Thus, when a module is ready, it is engaged by positioning pins 60 relative to associated tulips 52 on bus bars 16. Pushing the module against pins 60 causes tulips 52 to engage pins 60 automatically. When engaged, if the power bus backplane 8 is supported on a bulkhead or other solidly anchored self-supporting structure, pins 60 will support the modules through tulip connectors 52. Nesting of modules with one another adds support to the whole power node control center, including any modules not connected to power bus backplane 8. Removal of a module by reversing the process is also quite easy; replacement or substitution of modules can be readily accomplished.

Where necessary, as in the case of an exemplary low power module 40b such as shown in Figure 6, connection internal of the power node control center, between modules 40a and 40b other than to power bus backplane 8, may be employed. Modules may also be electrically and mechanically connected laterally to one another through adjacent sidewalls, in a self-connecting manner such as described above, before being connected as a modular unit to the power bus backplane 8. Alternatively, modules may be connected internally of the power node control center or through outside surface connectors.

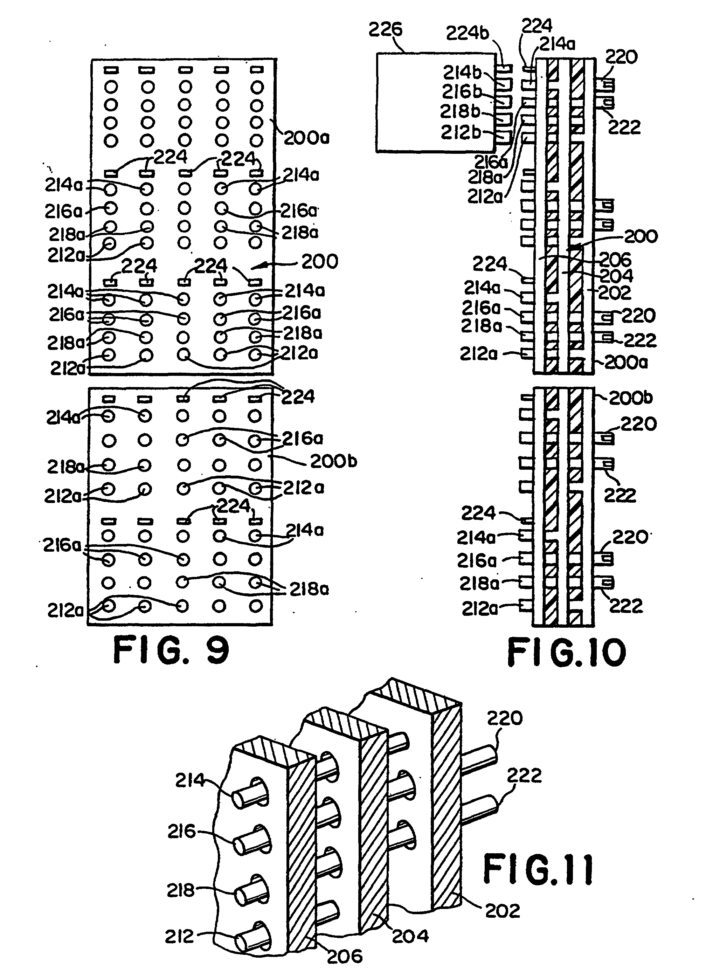

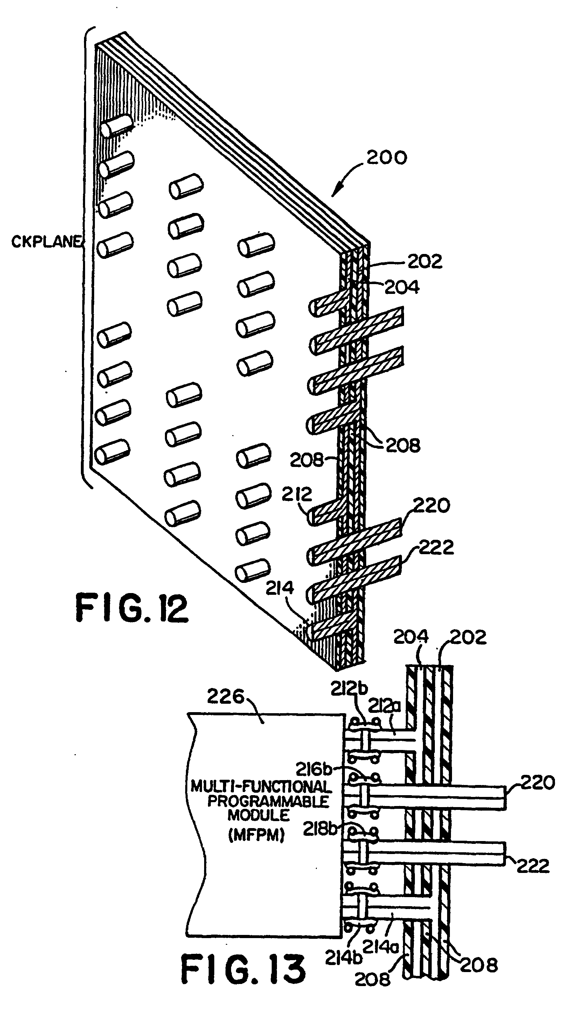

Referring to Figures 9 through 13 a different embodiment of a power bus backplane generally designated 200 is provided. The backplane may be made of parallel sheet conductors the size of the entire panel board. All of the drawings are schematic and Figures 12 and 13 show only the negative bus sheet 202 and the positive bus sheet 204. Figures 9, 10 and 11 show those bus sheets plus a control bus sheet 206 for carrying control signals much as a computer bus does. A control bus may not be supplied in each instance but offers an alternative to jumpers. The bus sheets may be broken into parallel bars which may or may not be interconnected. It is preferable to provide insulation 208 covering the front and back and edges as well as between the bus sheets. The backplane may be made by potting the bus sheets or bars and their various connections in a suitable resinous material that may be poured in liquid form and hardened so that the module as a whole is a single unitary structure encased in insulation.

As seen in Figure 13, the connectors are again preferably tulip connectors but located on the modules to connect to pins on the backplane.

Figure 11 is a schematic drawing intended to show connectors to and through the bus backplane. The drawing shows the conductors as uninsulated primarily to emphasize the fact that conductors which are not connected to a particular bus can pass through holes in the sheet bus conductors. This is made possible, of course, by making the openings in the other buses sufficiently large that the conductor with insulation around it can pass through. As is seen in Figure 11 conductor 214 passes through the enlarged opening in control bus sheet 206 and a similar opening in the positive bus sheet 204 before reaching and being attached to negative bus 202. Conductor 212 passes through the control bus sheet 206, through an enlarged opening and is connected to positive bus 204 but extends no further.

Both the positive cable 216 and negative cable 218 pass through enlarged openings in all three bus sheets so that they present terminals which extend beyond the bus module in order for cables to be attached to cable terminals 220 or 222. The opposite side of the power bus backplane has terminals for connection to modules so that in this embodiment, the cables terminate in pins 212a, 214a, 216a and 218a corresponding to the conductors described. Additionally, a conductor terminal 224 is also provided having connection to the control bus 206.

In Figures 9 and 10, the bus panel modules 200 are divided into an upper module 200a and lower module 200b. The upper panel has five columns and three rows of identical terminals and the lower panel has five columns of two rows of identical terminals. Since the terminals are of identical configuration, conforming modules can be conveniently coupled to any representative group column.

A single cooperating module 226 is shown in Figure 10. In this case the tulip connectors are shown as supported on the module. These are given similar number designators as the terminals to which they connect but with a "b" suffix. Since the modules have the tulip connectors, the power bus backplane 200 provides pin connectors. The opposite arrangement will also work, of course.

Figure 10 and Figure 13 differ in some detail in the structure and also in that there is no control bus in Figure 13 and thus no terminal end connector. Despite the differences which occur, the similarities are such that similar parts have been given similar number designators.

The modules in this embodiment differ from the modules in the earlier embodiment in that the module is connected along a long narrow edge and all of the connectors are in a single row. The connectors could be placed in a different pattern than a single row, particularly in those embodiments where the bus bars are sheets of copper or other conductive material. However, this arrangement lends to uniformity and the modules still can be rectangular solid boxes the contents of which are prepared in advance to produce desired functions in accordance with the design of the functional module. By placing the broad faces and the top and bottom edges of the modules against one another, additional support is provided in the same way it is provided in the previously described configurations.

It will be noted that this arrangement effectively supplies two power bus sheets or bars so that the bus backplane is capable of handling one phase of AC. If instead of sheets, different bus bars are provided in parallel rows behind the columns of connectors, adjacent columns could be used to supply a different one of three phases. Also using the configuration of Figure 9, the five columns of bus bars could supply three phase AC and DC. The same load terminals can be used as input terminals to place power on the bus bars or sheets using one module. Power may be taken from the bus bars in another module or as many others as the power bus backplane permits.

Examples of the simplest types of circuitry serve to illustrate how the modules function with the power bus backplanes of Figures 9-16.

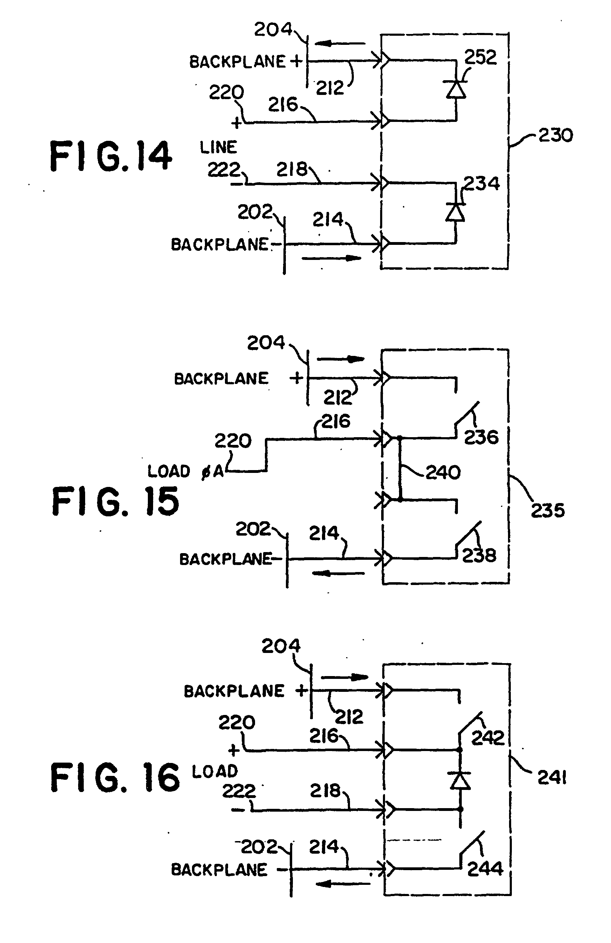

Figure 14 represents the conductors and connectors shown, for example, in Figure 13. In this case, the power line input is applied to terminals 220 and 222 and the power thus applied is fed to module 230. Module 230 has within it a pair of diodes 232 and 234. The diodes are connected to the positive and negative power lines as shown so that flow in the direction of the arrows can proceed to the bus bars 204 and 202, respectively, through the lines in the terminals 212 and 214 respectively. Thus the module is responsible for putting power on the respective bus sheets 202 and 204 and the diodes function to block reverse flow from the backplane toward the power source.

Figure 15 shows the backplane as a source of current. Flow will be in the direction of arrow 236 along conductor 212 and through the switch when the switch is closed. Power will flow in one direction provided switch 238 is not closed. When switch 238 is closed and switch 236 is open, power will flow through a cross connection 240 in the module into conductor 216 to reach output terminal 220 feeding phase A of the load. If a single phase is used, the other terminal of the load may be grounded to get phase A of the three phase power. If all three phases are used individual modules will produce an output at the corresponding terminal of phases B and C and their outputs can be connected in an appropriate three phase connection.

Figure 16 employs a module which again employs two switches 242 and 244. The switches respectively allow power to flow from the positive backplane sheet bus 204 through the line 212 to switch 242 to line 216, to the terminal 220 which is connected to the positive load terminal. Negative backplane sheet bus 202 produces an opposite flow through line 214, switch 244 and output line 218 to terminal 222 which is connected to the negative terminal of the load.

## Claims

1. An electrical modular power node 2(a) including a power bus backplane (8) containing a plurality of bus bars at least some of which are connectable to at least one power source, each bus bar having terminals spaced along the bus bar, each terminal being in a predetermined position in a pattern, and a plurality of functional modules (6), each housing at least one functional component and circuitry having at least one connector for connection to at least one terminal on a bus bar to provide output required by a load,
**characterized by**
respective ones of the bus bars (16a, 16b, 16c) running in a first direction and being adapted to carry differing phases and/or polarities of power with plural ones of said bars (16) carrying individual phases and/or polarities being connected together by tie bars (T16) extending generally traversely to said first direction, with the bus bars (16a, 16b, 16c) and tie bars (T16, T16b, T16c) of respective phases/polarities being generally coplanar and perpendicularly spaced from one another.

2. The electrical modular power node of claim 1 in which connections between functional modules (6) and terminals of the bus bars (16) results in vertical and lateral support of other modules in facing position relative to the power backplane and other modules.

3. The electrical modular power node of claim 2 in which the functional modules (6) are self-connecting to the backplane, such that when a functional module is properly positioned and oriented relative to the backplane and pressed towards the backplane, the terminals (52) and connectors (58) mechanically self-engage and make electrical contact and the backplane vertically supports the functional module via the connection.

4. The electrical modular power node of claim 1 in which parallel sets of bus bars (16) are provided in the backplane (8) and the functional modules are shaped and sized so that exterior surfaces of the functional modules facingly conform to bounding exterior surfaces of adjacent functional modules.

5. The electrical modular power node of claim 4 having module positions where some terminals on the bus bar are not to be electrically connected to a given functional module are provided which resemble those providing electrical connection and in those positions provide additional mechanical support.

6. The electrical modular power node of claim 4 in which connectors (54) supported on each functional module and selected terminals (52) of the bus bars (16) of the backplane (8) support said functional modules (6) in position relative to the power backplane (8) and relative to other functional modules.

7. The electrical modular power node of claim 5 in which pin connectors (54) on the functional modules are self-connecting to tulip terminals (52) on the backplane (8) such that when a functional module (6) is properly positioned and oriented relative to the backplane (8) and pressed toward the backplane (8), the terminals (52) and connectors (54) self-engage making electrical contact.

8. The electrical modular power node of claim 4 in which at least some of bars (16) in the same relative positions of the parallel sets of bus bars are electrically connected together.

9. The electrical modular power node of claim 8 in which at least one set of interconnected bars (16) is connected to a power source.

10. The electrical modular power node of claim 4 in which at least some bus bars (16) in the same relative positions of the parallel sets of bus bars are not electrically connected together and not connected to an external power source but at least one set of bus bars is connectable to an external power source.

11. The electrical modular power node of claim 3 in which at each minimum size functional module position on the backplane (8) there is a terminal for each bus bar in a standard pattern of configuration and orientation whereby connectors (54) in positions opposite selected terminals (52) engage those terminals (52) contribute to support of the functional module and terminals which are not opposed by connectors are accommodated by the module configuration to permit interconnection of those terminals and connectors which are opposed to one another.

12. The electrical modular power node of claim 3 in which at each minimum size functional module position on the backplane (8) there is a terminal for each bus bar (16) in a standard pattern of configuration and orientation whereby terminals (12, 14) in positions opposite selected connectors self-engage and contribute to support of the functional module (6) and terminals which are not opposed by connectors are accommodated by the module configuration to permit interconnection of those terminals and connectors which are opposed to one another.

13. The electrical modular power node of claim 3 in which those positions opposite terminals which are not to be connected electrically to a functional module (6) are opposed by connectors not electrically connected in the module providing mechanical support.

14. The electrical modular power node of claim 10 in which the terminals (12, 14) on the bus bars (16) of the backplane are spring-loaded gripping elements (52) and the connectors on the functional modules (6) are a simple post (60), whereby the gripping elements yield to a post but continue to engage that post as the functional module (6) is moved toward the backplane (8).

15. The electrical modular power node of claim 3 in which the backplane (8) is marked to indicate proper positioning of functional modules (6) of minimum size whereby functional modules placed in the positions indicated but spaced away from the backplane (8) may be moved toward the backplane (1) for self-engaging connection of the connectors (60) to the terminals (52).

16. The electrical modular power node of claim 4 in which the backplane (8) is marked to indicate proper positioning of functional modules (6) of minimum size whereby functional modules (6) placed in the positions indicated but spaced away from the backplane (8) may be moved towards the backplane for self-engaging connection of the connectors (60) to the terminals (52).

17. The electrical modular power node of claim 4 in which the backplane (8) is marked to indicate proper positioning of functional modules (6) of minimum size whereby functional modules placed in the positions indicated but spaced away from the backplane (8) may be moved toward the backplane (8) for self-engaging connections of the connectors (60) to the terminals (52), wherein functional modules have a dimension an integral multiple of the minimum size may also be accommodated by providing at least one set of connectors on the functional module (6) in the pattern orientation corresponding to at least part of one pattern and orientation of terminals (52) on the backplane (8) and wherein other terminals (52) at other positions on the backplane (8) are accommodated by design of the module.

18. The electrical modular power node of claim 17 in which all positions on the larger than minimum size functional module (6) which correspond to the terminal positions on the backplane (8) are provided with electrical connectors or non-electrical connectors which engage all of the terminals on the backplane (8) opposite the larger module and contribute to its support.

19. The electrical modular power node of claim 4 in which at least some functional modules (6) are directly electrically interconnected through connections on opposed functional module faces other than those facing the backplane.

20. The electrical modular power node of claim 9 in which at least some functional modules (6) are directly electrically interconnected through connections on opposed module faces other than those facing the backplane.

21. The electrical modular power node of claim 9 in which connectors (46) are supported on a sidewall face of a functional module (66) and terminals positioned to mate with the connectors are positioned on an opposed sidewall face of another functional module (6f).

22. The electrical modular power node of claim 21 in which the respective connectors (52, 60) are self-connecting and in predetermined patterns, orientation and position on the sidewalls so that when the sidewalls are moved together with the modules in predetermined position the connections self-connect, electrically connecting active electrical connections and their respective circuitry together.

23. The electrical modular power node of claim 22 in which the respective connectors (52, 60) are supported on opposed faces parallel to the backplane (8) of functional modules (6) enabling the functional modules (6) to be stacked away from the backplane (8) so that an outer module (40b) is supported on an inter module (40a) at least in part by engagement of their respective electrical terminals and connectors.

24. The electrical modular power node (2a) of claim 2 wherein the power bus backplane (8) bus bars (16) are parallel and substantially co-planar, wherein the functional modules (6) are contained individually in respective parallelpiped-shaped housings adapted for complementally contacting fitting with other ones of said functional modules (6) and with said backplane (8), at least some of said functional modules (6) comprising at least one of rectifying means, switching means, voltage conversion means, voltage regulation means, pulse and other wave form generation means, voltage transformation means and/or power sensing and limiting means,
wherein the power node is further **characterized by** a control module (10) contained in a parallelpiped-shaped housing adapted for complementally contacting fitting with at least one of said functional modules (6) and with said backplane (8) and having programmable microprocessor means for controlling operation of at least one of said functional modules (6) according to preselected instructions and operating and performance criteria including at least one of voltage and current limits, voltage polarity, surge criteria, temperature limits, humidity limits, shock limits and alternating current phase parameters, and plug-compatible means (48) on said backplane (8) and at least one of said functional modules (6) for electrically connecting a selected functional module (6) to said bus bars (16) of said backplane (8).

25. The electrical modular power node of claim 24 further **characterized by** outer surfaces of said functional and control modules facing away from or perpendicular to said backplane being planar and smooth.

26. The electrical modular power node of claim 24 further **characterized by** said bus bars being grouped in sets with each set embracing at least two bus bars and being adapted to carry power having phase and/or polarity differing from power carried by other sets, said bars of each set being connected together and generally coplanar with one another.

27. The electrical modular power node of claim 26 further **characterized by** the sets being transversely spaced one from another.

28. The electrical modular power node of claim 24 wherein the plug compatible means (48) includes a plurality of spring loaded receptacles (52) connected to respective sets of said bus bars (16) and being adapted to receive connector pins (54) extending from functional module surfaces facing said backplane (18).

29. The electrical modular power node of claim 1 further **characterized by** respective ones of said bus bars (16) numbering at least two, running in a first direction and being adapted to carry power of differing phase or polarity, rigid terminals connected to each of the bus connectors and resinous material cast about the bus conductors to support the bus conductors and the rigid terminals,
with pluralities of such bus conductors (16a, 16b, 16c) being grouped in a plurality of sets;
with bus conductors of each set being connected together by ties (T16a, T16b, T16c) extending transversely to the first direction, the ties being at least partially embedded within the cast resinous material;
with bus conductors of each set being laterally spaced from one another in a second direction transversely to the first direction;
with the sets being transversely spaced one from another in a third direction perpendicular to the first and second direction so that the bus conductors and the ties of respective sets carrying respective individual phases and/or polarities are co-planar and perpendicularly spaced from one another.

30. The electrical modular power node of claim 29 further **characterized by** connector pins on a module (6) are adapted to fit on the backplane (8) into receptacles formed thereon and with the receptacles on the backplane (8) including at least one fitting sufficiently snugly with a corresponding module connector pin inserted thereinto to act together with the received connector pin as a self-engaging connector so that the module (6) and backplane (8) fit and are retained closely together upon being positioned and pressed towards one another.

31. The electrical modular power node of claim 30 in which the bus conductors are in a stacked array and terminals for a bus conductor on the bottom pass through a clearance hold in a bus conductor on the top with an insulating gap therebetween.

32. The electrical modular power node of claim 31 in which the bus conductors are in a repeated side-by-side orientation resulting in columns of stacked bus conductors with regular columns of terminals for receiving modules (6) at regular intervals along the column.

## Patentansprüche

1. Modularer Stromverteilungsknoten (2a) einschließlich einer Stromsammelschienen-Rückwandplatine (8), die mehrere Sammelschienen enthält, von denen mindestens einige an mindestens eine Stromquelle anschließbar sind, wobei jede Sammelschiene längs beabstandete Klemmen aufweist und sich jede Klemme in einer vorbestimmten Position in einer Struktur befindet; und einschließlich mehrerer Funktionsmodule (6), von denen jedes mindestens ein Funktionsbauteil und eine Schaltung mit mindestens einem Stecker zum Anschluss an mindestens eine Klemme einer Sammelschiene enthält, um einen für eine Last erforderlichen Ausgang bereitzustellen,
**gekennzeichnet durch**
jeweilige Sammelschienen (16a, 16b, 16c), die in einer ersten Richtung verlaufen und so ausgelegt sind, dass sie unterschiedliche Stromphasen und/oder -polaritäten über mehrere der Schienen (16) führen können, die einzelne Phasen und/oder Polaritäten führen und **durch** im Wesentlichen quer zur ersten Richtung verlaufende Verbindungsschienen (T16) miteinander verbunden sind, wobei die Sammelschienen (16a, 16b, 16c) und Verbindungsschienen (T16a, T16b, T16c) der jeweiligen Phasen/Polaritäten im Wesentlichen koplanar und senkrecht zueinander beabstandet sind.

2. Modularer Stromverteilungsknoten nach Anspruch 1, bei der die Anschlüsse zwischen den Funktionsmodulen (6) und den Klemmen der Sammelschienen (16) für vertikalen und seitlichen Halt von anderen Modulen in der gegenüberliegenden Position - bezogen auf die Strom-Rückwandplatine und andere Module - sorgen.

3. Modularer Stromverteilungsknoten nach Anspruch 2, bei der die Funktionsmodule (6) selbstanschließend mit der Rückwandplatine sind, so dass, wenn ein bezogen auf die Rückwandplatine richtig positioniertes und ausgerichtetes Funktionsmodul gegen die Rückwandplatine gedrückt wird, die Klemmen (52) und Stecker (58) mechanisch selbst ineinander greifen und elektrischen Kontakt herstellen und die Rückwandplatine das Funktionsmodul mit Hilfe des Anschlusses vertikal stützt.

4. Modularer Stromverteilungsknoten nach Anspruch 1, bei der parallele Gruppen von Sammelschienen (16) in der Rückwandplatine (8) vorgesehen sind und die Funktionsmodule so geformt und bemessen sind, dass ihre Außenflächen den gegenüberliegenden äußeren Grenzflächen benachbarter Funktionsmodule entsprechen.

5. Modularer Stromverteilungsknoten nach Anspruch 4 mit Modulpositionen, wo einige Klemmen an der Sammelschiene vorgesehen sind, die elektrisch nicht mit einem bestimmten Funktionsmodul verbunden werden sollen; und die denjenigen Klemmen ähneln, die elektrischen Kontakt bereitstellen; und die in diesen Positionen für zusätzlichen mechanischen Halt sorgen.

6. Modularer Stromverteilungsknoten nach Anspruch 4, bei der Stecker (54), die an jedem Funktionsmodul gehalten werden, und ausgewählte Klemmen (52) der Sammelschienen (16) der Rückwandplatine (8) die Funktionsmodule (6) in einer Position bezogen auf die Strom-Rückwandplatine (8) und bezogen auf andere Funktionsmodule halten.

7. Modularer Stromverteilungsknoten nach Anspruch 5, bei der Stiftstecker (54) an den Funktionsmodulen selbstanschließend mit tulpenförmigen Klemmen (52) an der Rückwandplatine sind, so dass, wenn ein bezogen auf die Rückwandplatine (8) richtig positioniertes und ausgerichtetes Funktionsmodul (6) gegen die Rückwandplatine (8) gedrückt wird, die Klemmen (52) und Stecker (54) selbst ineinander greifen und elektrischen Kontakt herstellen.

8. Modularer Stromverteilungsknoten nach Anspruch 4, bei der mindestens einige der Schienen (16) in den gleichen relativen Positionen der parallelen Gruppen von Sammelschienen elektrisch miteinander verbunden sind

9. Modutarer Stromverteilungsknoten nach Anspruch 8, bei der mindestens eine Gruppe von miteinander verbundenen Schienen (16) an eine Stromquelle angeschlossen ist.

10. Modularer Stromverteilungsknoten nach Anspruch 4, bei der mindestens einige der Sammelschienen (16) in den gleichen relativen Positionen der parallelen Gruppen von Sammelschienen elektrisch nicht miteinander verbunden und nicht an eine externe Stromquelle angeschlossen sind, wobei aber mindestens eine Gruppe von Sammelschienen an eine externe Stromquelle anschließbar ist.

11. Modularer Stromverteilungsknoten nach Anspruch 3, bei der sich an jeder Position für das Kleinstmaß-Funktionsmodul an der Rückwandplatine (8) eine Klemme für jede Sammelschiene in einer normalen Anordnungs- und Ausrichtungsstruktur befindet, wodurch die gegenüber ausgewählten Klemmen (52) positionierten Stecker (54) in diese Klemmen (52) eingreifen und zum Halt des Funktionsmoduls beitragen und wodurch diejenigen Klemmen, denen keine Stecker gegenüberliegen, in der Modulanordnung untergebracht werden, um einen Anschluss zwischen denjenigen Klemmen und Steckern zu ermöglichen, die einander gegenüberliegen.

12. Modularer Stromverteilungsknoten nach Anspruch 3, bei der sich an jeder Position für das Kleinstmaß-Funktionsmodul an der Rückwandplatine (8) eine Klemme für jede Sammelschiene (16) in einer normalen Anordnungsund Ausrichtungsstruktur befindet, wodurch diejenigen Klemmen (12, 14) in Positionen, die den ausgewählten Steckern gegenüberliegen, selbst eingreifen und zum Halt des Funktionsmoduls (6) beitragen und wodurch diejenigen Klemmen, denen keine Stecker gegenüberliegen, in der Modulanordnung untergebracht werden, um einen Anschluss zwischen denjenigen Klemmen und Steckern zu ermöglichen, die einander gegenüberliegen.

13. Modularer Stromverteilungsknoten nach Anspruch 3, bei der diejenigen Positionen gegenüber Klemmen, die elektrisch nicht mit einem Funktionsmodul (6) verbunden werden sollen, Steckern gegenüberliegen, die im Modul elektrisch nicht angeschlossen sind, und für mechanischen Halt sorgen.

14. Modularer Stromverteilungsknoten nach Anspruch 10, bei der die Klemmen (12, 14) an den Sammelschienen (16) der Rückwandplatine federgespannte Klemmbauteile (52) sind und die Stecker an den Funktionsmodulen (6) einfache Stifte (60) sind, wodurch die Klemmbauteile einem Stift zwar nachgeben, ihn aber weiter in Eingriff halten, während das Funktionsmodul (6) gegen die Rückwandplatine (8) gedrückt wird.

15. Modularer Stromverteilungsknoten nach Anspruch 3, bei der die Rückwandplatine (8) gekennzeichnet ist, um die richtige Positionierung von Kleinstmaß-Funktionsmodulen (6) anzuzeigen, wodurch die in den angezeigten Positionen positionierten, aber von der Rückwandplatine (8) beabstandeten Funktionsmodule gegen die Rückwandplatine (8) bewegt werden können, um für sefbsteingreifenden Anschluss der Stecker (60) an den Klemmen (52) zu sorgen.

16. Modularer Stromverteilungsknoten nach Anspruch 4, bei der die Rückwandplatine (8) gekennzeichnet ist, um die richtige Positionierung von Kleinstmaß-Funktionsmodulen (6) anzuzeigen, wodurch die in den angezeigten Positionen positionierten, aber von der Rückwandplatine (8) beabstandeten Funktionsmodule (6) gegen die Rückwandplatine bewegt werden werden können, um für selbsteingreifenden Anschluss der Stecker (60) an den Klemmen (52) zu sorgen.

17. Modularer Stromverteilungsknoten nach Anspruch 4, bei der die Rückwandplatine (8) gekennzeichnet ist, um die richtige Positionierung der Kleinstmaß-Funktionsmodule (6) anzuzeigen, wodurch die in den angezeigten Positionen positionierten, aber von der Rückwandplatine (8) beabstandeten Funktionsmodule gegen die Rückwandplatine (8) bewegt werden können, um für selbsteingreifenden Anschluss der Stecker (60) an den Klemmen (52) zu sorgen, wobei die Funktionsmodule ein ganzzahliges Vielfaches des Kleinstmaßes groß sind und außerdem untergebracht werden können, indem mindestens eine Gruppe von Steckern des Funktionsmoduls (6) in der Struktur und Ausrichtung vorgesehen ist, die mindestens einem Teil einer Struktur und Ausrichtung der Klemmen (52) an der Rückwandplatine (8) entspricht; und wobei andere Klemmen (52) an anderen Positionen der Rückwandplatine (8) in der Bauform des Moduls untergebracht werden.

18. Modularer Stromverteilungsknoten nach Anspruch 17, bei der alle Positionen am das Kleinstmaß übersteigenden Funktionsmodul (6), die den Klemmenpositionen an der Rückwandplatine (8) entsprechen, mit elektrischen oder nicht-elektrischen Steckern vorgesehen sind, die in alle dem größeren Modul gegenüberliegenden Klemmen der Rückwandplatine (8) eingreifen und zu dessen Halt beitragen.

19. Modularer Stromverteilungsknoten nach Anspruch 4, bei der mindestens einige Funktionsmodule (6) elektrisch direkt über Anschlüsse an denjenigen gegenüberliegenden Funktionsmodulflächen miteinander verbunden sind, die nicht der Rückwandplatine gegenüberliegen.

20. Modularer Stromverteilungsknoten nach Anspruch 9, bei der mindestens einige Funktionsmodule (6) elektrisch direkt über Anschlüsse an denjenigen gegenüberliegenden Modulflächen miteinander verbunden sind, die nicht der Rückwandplatine gegenüberliegen.

21. Modularer Stromverteilungsknoten nach Anspruch 9, bei der Stecker (46) an einer Seitenfläche eines Funktionsmoduls (66) gehalten werden und die für den Eingriff der Stecker positionierten Klemmen an einer gegenüberliegenden Seitenfläche eines anderen Funktionsmoduls (6f) angeordnet sind.

22. Modularer Stromverteilungsknoten nach Anspruch 21, bei der die jeweiligen Stecker (52, 60) selbstanschließend sind und sich in vorbestimmter Struktur, Ausrichtung und Position an den Seitenflächen befinden, so dass, wenn die Seitenflächen zusammen mit den Modulen in die vorbestimmte Position bewegt werden, durch Selbstanschluss der Verbindungen die aktiven elektrischen Anschlüsse und ihre jeweilige Schaltung elektrisch verbunden werden.

23. Modularer Stromverteilungsknoten nach Anspruch 22, bei der die jeweiligen Stecker (52, 60) an parallel zur Rückwandplatine (8) einander gegenüberliegenden Flächen der Funktionsmodule (6) gehalten werden und dadurch ein von der Rückwandplatine (8) abgewandtes Aufeinanderstecken der Funktionsmodule (6) ermöglicht wird, so dass ein äußeres Modul (40b) zumindest teilweise durch Ineinandergreifen der jeweiligen elektrischen Klemmen und Stecker an einem inneren Modul (40a) gehalten wird.

24. Modularer Stromverteilungsknoten nach Anspruch 2, wobei die Sammelschienen (16) der Stromsammelschienen-Rückwandplatine (8) parallel und im Wesentlichen koplanar sind, wobei die Funktionsmodule (6) einzeln in jeweiligen Parallelepiped-förmigen Gehäusen enthalten sind, die für ein gegenseitig kontaktierendes Ineinanderstecken mit anderen Funktionsmodulen (6) und mit der Rückwandplatine (8) ausgelegt sind, wobei mindestens einige der Funktionsmodule (6) mindestens ein Gleichrichtungsmittel, Schaltmittel, Spannungsumsetzungsmittel, Spannungsregelmittel, Impulserzeugungsmittel (oder Erzeugungsmittel für andere Wellenform), Spannungswandlungsmittel und/oder Strom erfassendes und begrenzendes Mittel umfassen,
wobei die Modularer Stromverteilungsknoten außerdem **gekennzeichnet ist durch**:
ein Kontrollmodul (10), das in einem Parallelepiped-förmigen Gehäuse enthalten ist, das für ein gegenseitig kontaktierendes Ineinanderstecken mit anderen Funktionsmodulen (6) und mit der Rückwandplatine (8) ausgelegt ist und Folgendes aufweist: ein programmierbares Mikroprozessormittel zur Steuerung des Betriebs von mindestens einem der Funktionsmodule (6) gemäß den vorher ausgewählten Anweisungen und Betriebs- und Leistungskriterien - einschließlich mindestens einem Parameter für Spannungs- und Strombegrenzung, Spannungspolarität, Überspannungskriterium, Temperaturbegrenzung, Feuchtigkeitsbegrenzung, Stromstoßbegrenzung und Wechselstromphase;
ein steckerkompatibles Mittel (48) an der Rückwandplatine (8); und
mindestens eins der Funktionsmodule (6) für den elektrischen Anschluss eines ausgewählten Funktionsmoduls (6) an die Sammelschienen (16) der Rückwandplatine (8).

25. Modularer Stromverteilungsknoten nach Anspruch 24, außerdem **gekennzeichnet durch** ebene und glatte Außenflächen der Funktions- und Kontrollmodule, die von der Rückwandplatine abgewandt sind oder senkrecht dazu stehen.

26. Modularer Stromverteilungsknoten nach Anspruch 24, außerdem **gekennzeichnet durch** in Gruppen angeordnete Sammelschienen, wobei jede Gruppe mindestens zwei Sammelschienen umfasst und für das Führen von Strom ausgelegt ist, der eine Phase und/oder Polarität aufweist, die sich von der des von anderen Gruppen geführten Stroms unterscheidet, wobei die Schienen jeder Gruppe miteinander verbunden und im Wesentlichen koplanar sind.

27. Modularer Stromverteilungsknoten nach Anspruch 26, außerdem **gekennzeichnet durch** die Gruppen, die quer zueinander beabstandet sind.

28. Modularer Stromverteilungsknoten nach Anspruch 24, wobei das steckerkompatible Mittel (48) mehrere federgespannte Fassungen (52) einschließt, die mit den jeweiligen Gruppen der Sammelschienen (16) verbunden sind und die für die Aufnahme von Stiftsteckern (54) ausgelegt sind, die aus den der Rückwandplatine (8) gegenüberliegenden Flächen der Funktionsmodule herausragen.

29. Modularer Stromverteilungsknoten nach Anspruch 1, außerdem **gekennzeichnet durch** jeweils mindestens zwei Sammelschienen (16), die in einer ersten Richtung verlaufen und so ausgelegt sind, dass sie Strom unterschiedlicher Phase und/oder Polarität führen können, wobei starre Klemmen an jedem der Sammelschienenstecker angeschlossen sind und Harzmaterial um die Sammelschienen herum gegossen ist, um die Sammelschienen und starren Klemmen zu stützen,
wobei mehrere solcher Sammelschienen (16a, 16b, 16c) in mehreren Gruppen angeordnet sind;
wobei die Sammelschienen jeder Gruppe **durch** quer zur ersten Richtung verlaufende Verbindungsschienen (T16a, T16b, T16c) miteinander verbunden sind und die Verbindungsschienen zumindest teilweise in das Gussharzmaterial eingebettet sind;
wobei die Sammelschienen jeder Gruppe seitlich voneinander in einer zweiten Richtung beabstandet sind, die quer zur ersten Richtung verläuft;
wobei die Gruppen quer zueinander in einer dritten Richtung beabstandet sind, die senkrecht zu ersten und zweiten Richtung verläuft, so dass die Sammelschienen und Verbindungsschienen jeweiliger Gruppen, die jeweils individuelle Phasen und/oder Polaritäten führen, koplanar und senkrecht voneinander beabstandet sind.

30. Modularer Stromverteilungsknoten nach Anspruch 29, außerdem **gekennzeichnet durch** Stiftstecker an einem Modul (6), die in an der Rückwandplatine (8) angebrachte Fassungen passen, wobei die Fassungen an der Rückwandplatine mindestens ein Anschlussstück einschließen, das eng genug am darin eingesteckten entsprechenden Stiftstecker des Moduls anliegt, um zusammen mit dem aufgenommenen Stiftstecker als selbsteingreifender Anschluss zu fungieren, so dass das Modul (6) und die Rückwandplatine (8) zueinander passen und eng aneinander festgehalten werden, wenn sie positioniert und gegeneinander gedrückt werden.

31. Modularer Stromverteilungsknoten nach Anspruch 30, bei der die Sammelschienen aufeinander gesteckt angeordnet sind und die Klemmen einer unteren Sammelschiene durch ein Freiloch in der oberen Sammelschiene passen und ein isolierender Spalt dazwischen verbleibt.

32. Modularer Stromverteilungsknoten nach Anspruch 31, bei der die Sammelschienen wiederholt nebeneinander liegend ausgerichtet sind, woraus sich Reihen aufeinander gesteckter Sammelschienen mit regelmäßigen Reihen von Klemmen ergeben, um Module (6) in regelmäßigen Abständen längs der Reihe aufzunehmen.

## Revendications

1. Noeud de puissance électrique modulaire 2(a), comprenant un fond de panier de bus d'alimentation (8) contenant une pluralité de barres bus dont au moins quelques unes sont connectables à au moins une source de courant, chaque barre bus ayant des bornes espacées le long de la barre bus, chaque borne étant dans une position prédéterminée dans un modèle, et une pluralité de modules fonctionnels (6), chacun logeant au moins un composant fonctionnel et des circuits ayant au moins un connecteur pour raccordement à au moins une borne sur une barre bus afin de fournir la sortie exigée par une charge, **caractérisé par** celles respectives des barres bus (16a, 16b, 16c) cheminant dans une première direction et étant adaptées pour transporter différentes phases et/ou polarités de courant avec une pluralité de celles desdites barres (16) transportant des phases et/ou polarités individuelles étant connectées ensemble par des barres de raccordement (T16) s'étendant généralement transversalement à ladite première direction, avec les barres bus (16a, 16b, 16c) et les barres de raccordement (T16, T16b, T16c) de phases/polarités respectives étant généralement coplanaires et perpendiculairement espacées les unes des autres.

2. Noeud de puissance électrique modulaire selon la revendication 1, dans lequel les connexions entre les modules fonctionnels (6) et les bornes des barres bus (16) résultent en un soutien vertical et latéral d'autres modules en position opposée par rapport au fond de panier d'alimentation et aux autres modules.

3. Noeud de puissance électrique modulaire selon la revendication 2, dans lequel les modules fonctionnels (6) se connectent automatiquement au fond de panier, de telle sorte que si un module fonctionnel est correctement positionné et orienté par rapport au fond de panier et repoussé vers le fond de panier, les bornes (52) et les connecteurs (58) s'engagent mécaniquement automatiquement et établissent un contact électrique et le fond de panier soutient verticalement le module fonctionnel par l'intermédiaire de la connexion.

4. Noeud -de puissance électrique modulaire selon la revendication 1, dans lequel des ensembles de barres bus (16) sont prévus dans le fond de panier (8) et les modules fonctionnels sont formés et dimensionnés de telle sorte que les surfaces extérieures des modules fonctionnels s'adaptent de manière opposée aux surfaces extérieures limites des modules fonctionnels adjacents.

5. Noeud de puissance électrique modulaire selon la revendication 4, ayant des positions de modules où sont prévues des bornes sur les barres bus qui ne sont pas à connecter électriquement à un module fonctionnel donné qui ressemblent à celles assurant la connexion électrique et dans ces positions réalisent un soutien mécanique supplémentaire.

6. Noeud de puissance électrique modulaire selon la revendication 4, dans lequel les connecteurs (54) supportés sur chaque module fonctionnel et les bornes (52) sélectionnées des barres bus (16) du fond de panier (8) supportent lesdits modules fonctionnels (6) en position par rapport au fond de panier d'alimentation (8) et par rapport aux autres modules fonctionnels.

7. Noeud de puissance électrique modulaire selon la revendication 5, dans lequel les connecteurs mâles (54) sur les modules fonctionnels se connectent automatiquement aux bornes femelles (52) sur le fond de panier (8) de telle sorte que si un module fonctionnel (6) est correctement positionné et orienté par rapport au fond de panier (8) et engagé à force vers le fond de panier (8), les bornes (52) et les connecteurs (54) s'engagent automatiquement formant un contact électrique.

8. Noeud de puissance électrique modulaire selon la revendication 4, dans lequel au moins certaines des barres (16) dans les mêmes positions relatives des ensembles parallèles de barres bus sont connectées électriquement entre elles.

9. Noeud de puissance électrique modulaire selon la revendication 8, dans lequel au moins un ensemble de barres interconnectées (16) est connecté à une source d'énergie.

10. Noeud de puissance électrique modulaire selon la revendication 4, dans lequel au moins certaines barres bus (16) dans les mêmes positions relatives des ensembles parallèles de barres bus ne sont pas connectées électriquement entre elles et ne sont pas connectées à une source d'énergie externe mais au moins un ensemble de barres bus peut être connecté à une source d'énergie externe.

11. Noeud de puissance électrique modulaire selon la revendication 3, dans lequel à chaque position de module fonctionnel de taille minimale sur le fond de panier (8), il y a une borne pour chaque barre bus dans un modèle standard de configuration et d'orientation, en conséquence de quoi les connecteurs (54) dans des positions opposées aux bornes sélectionnées (52) engagent ces bornes (52), contribuent au soutien du module fonctionnel et les bornes qui ne sont pas opposées à des connecteurs sont adaptées par la configuration du module pour permettre l'interconnexion de ces bornes et connecteurs qui sont opposés entre eux.

12. Noeud de puissance électrique modulaire selon la revendication 3, dans lequel à chaque position de module fonctionnel de taille minimale sur le fond de panier (8), il y a une borne pour chaque barre omnibus (16) dans un modèle standard de configuration et d'orientation, en conséquence de quoi les bornes (12, 14) dans des positions opposées aux connecteurs sélectionnés s'engagent automatiquement et participent au soutien du module fonctionnel (6) et les bornes qui ne sont pas opposés à des connecteurs sont adaptés par la configuration du module pour permettre l'interconnexion de ces bornes et connecteurs qui sont opposés entre eux.

13. Noeud de puissance électrique modulaire selon la revendication 3, dans lequel les positions opposées à des bornes qui ne sont pas à être connectées électriquement à un module fonctionnel (6) sont opposées à des connecteurs non électriquement raccordés dans le module réalisant le support mécanique.

14. Noeud de puissance électrique modulaire selon la revendication 10, dans lequel les bornes (12, 14) sur les barres bus (16) du fond de panier sont des éléments de serrage à ressort (52) et les connecteurs sur les modules fonctionnels (6) sont une simple broche (60), en conséquence de quoi les éléments de serrage cèdent à une broche mais continuent à engager cette broche alors que le module fonctionnel (6) est déplacé vers le fond de panier (8).

15. Noeud de puissance électrique modulaire selon la revendication 3, dans lequel le fond de panier (8) est repéré pour indiquer le positionnement correct des modules fonctionnels (6) de taille minimale, en conséquence de quoi les modules fonctionnels placés dans les positions indiquées mais écartées du fond de panier (8) peuvent être déplacés vers le fond de panier (1) pour une connexion à engagement automatique des connecteurs (60) avec les bornes (52).

16. Noeud de puissance électrique modulaire selon la revendication 4, dans lequel le fond de panier (8) est repéré pour indiquer le positionnement correct des modules fonctionnels (6) de taille minimale, en conséquence de quoi les modules fonctionnels (6) placés dans les positions indiquées mais écartées du fond de panier (8) peuvent être déplacés vers le fond de panier pour une connexion à engagement automatique des connecteurs (60) avec les bornes (52).

17. Noeud de puissance électrique modulaire selon la revendication 4, dans lequel le fond de panier (8) est repéré pour indiquer le positionnement correct des modules fonctionnels (6) de taille minimale, en conséquence de quoi les modules fonctionnels placés dans les positions indiquées mais écartées du fond de panier (8) peuvent être déplacés vers le fond de panier (8) pour des connexions à engagement automatique des connecteurs (60) avec les bornes (52), dans lequel des modules fonctionnels ayant une dimension qui est un multiple entier de la taille minimale peuvent être aussi adaptés en installant au moins un ensemble de connecteurs sur le module fonctionnel (6) dans une orientation de modèle correspondant à au moins une partie d'un modèle et une orientation des bornes (52) sur le fond de panier (8) et dans lequel les autres bornes (52) à d'autres positions sur le fond de panier (8) sont adaptées par la conception du module.

18. Noeud de puissance électrique modulaire selon la revendication 17, dans lequel toutes les positions sur le module fonctionnel plus grand que la taille minimale (6) qui correspondent aux positions des bornes sur le fond de panier (8) sont munies de connecteurs électriques ou de connecteurs non électriques qui engagent l'ensemble des bornes sur le fond de panier (8) faisant face au plus grand module et participent à son soutien.

19. Noeud de puissance électrique modulaire selon la revendication 4, dans lequel au moins des modules fonctionnels modulaires (6) sont électriquement interconnectés directement des connexions sur les faces de modules fonctionnels opposées autres que celles faisant face au fond de panier.

20. Noeud de puissance électrique modulaire selon la revendication 9, dans lequel au moins des modules fonctionnels modulaires (6) sont électriquement interconnectés directement par l'intermédiaire des connexions sur les faces de modules opposées autres que celles faisant face au fond de panier.

21. Noeud de puissance électrique modulaire selon la revendication 9, dans lequel les connecteurs (46) sont supportés sur une face de paroi latérale d'un module fonctionnel (66) et les bornes placées pour accouplement avec les connecteurs sont positionnées sur une face de paroi latérale opposée d'un autre module fonctionnel (6f).

22. Noeud de puissance électrique modulaire selon la revendication 21, dans lequel les connecteurs respectifs (52, 60) sont connectés automatiquement et suivant des modèles, orientation et position prédéterminés sur les parois latérales de telle sorte que si les parois latérales sont déplacées conjointement avec les modules dans une position prédéterminée, les connexions s'établissent automatiquement, raccordant électriquement ensemble des connexions électriques actives et leurs circuits respectifs.

23. Noeud de puissance électrique modulaire selon la revendication 22, dans lequel les connecteurs respectifs (52, 60) sont supportés sur des faces opposées parallèles au fond de panier (8) des modules fonctionnels (6) permettant aux modules fonctionnels (6) d'être empilés éloignés du fond de panier (8) afin qu'un module extérieur (40b) soit supporté sur un module intermédiaire (40a) au moins en partie par engagement de leurs bornes et connecteurs électriques respectifs.

24. Noeud de puissance électrique modulaire (2a) selon la revendication 2, dans lequel les barres bus (16) du fond de panier de bus d'alimentation (8) sont parallèles et substantiellement coplanaires, dans lequel les modules fonctionnels (6) sont contenus individuellement dans des boîtiers parallélépipédiques respectifs adaptés pour assemblage complémentaire par contact avec d'autres boîtiers desdits modules fonctionnels (6) et avec ledit fond de panier (8), au moins certains desdits modules fonctionnels (6) comprenant au moins un parmi un moyen de redressement, un moyen de commutation, un moyen convertisseur de tension, un moyen régulateur de tension, un moyen générateur d'impulsions et d'autres formes d'onde, un moyen transformateur de tension et/ou un moyen détecteur et limiteur d'alimentation, dans lequel le noeud d'alimentation est en outre **caractérisé par** un module de commande (10) contenu dans un boîtier parallélépipédique adapté pour assemblage complémentaire par contact avec au moins un desdits modules fonctionnels (6) et avec ledit fond de panier (8) et ayant un moyen de microprocesseur programmable pour commander un fonctionnement d'au moins un desdits modules fonctionnels (6) selon des instructions présélectionnées et des critères de fonctionnement et de performances comprenant au moins un parmi des limites de tension et de courant, une polarité de tension, des critères de surtension, des limites de température, des limites d'humidité, des limites de chocs et des paramètres de phase de courant alternatif, et des moyens interchangeables (48) sur ledit fond de panier (8) et au moins un desdits modules fonctionnels (6) pour raccorder électriquement un module fonctionnel sélectionné (6) auxdites barres bus (16) dudit fond de panier (8).

25. Noeud de puissance électrique modulaire selon la revendication 24, **caractérisé en outre par** des surfaces extérieures desdits modules fonctionnels et de commande éloignées ou perpendiculaires audit fond de panier étant planes ou lisses.

26. Noeud de puissance électrique modulaire selon la revendication 24, **caractérisé en outre par** lesdites barres bus étant groupées dans des ensembles avec chaque ensemble englobant au moins deux barres bus et étant adaptées pour transporter l'alimentation ayant une phase et/ou une polarité différentes de l'alimentation transportée par d'autres ensembles, lesdites barres de chaque ensemble étant connectées entre elles et généralement coplanaires entre elles.

27. Noeud de puissance électrique modulaire selon la revendication 26, **caractérisé en outre par** les ensembles étant transversalement écartés les uns les autres.

28. Noeud de puissance électrique modulaire selon la revendication 24, dans lequel le moyen interchangeable (48) comprend une pluralité d'embases à ressort (52) connectées aux ensembles respectifs desdites barres bus (16) et étant adaptées pour recevoir des broches de connecteurs (54) dépassant des surfaces de modules fonctionnels faisant face audit fond de panier (18).

29. Noeud de puissance électrique modulaire selon la revendication 1, **caractérisé en outre par** celles respectives desdites barres bus (16) au nombre d'au moins deux, cheminant dans une première direction et étant adaptées pour transporter l'alimentation de phase ou de polarité différente, des bornes rigides connectées à chacun des connecteurs de bus et un matériau résineux coulé autour des conducteurs de bus pour supporter les conducteurs de bus et les bornes rigides,
avec des pluralités de tels conducteurs de bus (16a, 16b, 16c) étant groupés dans une pluralité d'ensembles ;
avec des conducteurs de bus de chaque ensemble étant connectés ensemble par des liens (T16a, T16b, T16c) s'étendant transversalement vers la première direction, les liens étant au moins partiellement encastrés à l'intérieur du matériau résineux coulé ;
avec des conducteurs de bus de chaque ensemble étant latéralement espacés les uns des autres dans une deuxième direction transversale à la première direction ;
avec les ensembles étant transversalement espacés les uns des autres dans une troisième direction perpendiculaire à la première et à la deuxième direction afin que les conducteurs de bus et les liens des ensembles respectifs transportant des phases et/ou polarités individuelles respectives soient coplanaires et perpendiculairement écartés les uns des autres.

30. Noeud de puissance électrique modulaire selon la revendication 29, **caractérisé en outre par** des broches de connecteurs sur un module (6) qui sont adaptées pour être ajustées sur le fond de panier (8) dans des embases formées dessus et avec les embases sur le fond de panier (8) comprenant au moins un ajustement suffisamment serré avec une broche de connecteur de module correspondante insérée dedans pour agir conjointement avec la broche de connecteur reçue comme un connecteur à engagement automatique afin que le module (6) et le fond de panier (8) s'adaptent et soient étroitement maintenus ensemble en étant positionnés et appuyés l'un vers l'autre.

31. Noeud de puissance électrique modulaire selon la revendication 30, dans lequel les conducteurs de bus sont dans un réseau empilé et les bornes pour un conducteur de bus à la partie inférieure passent dans un espace contenu dans un conducteur de bus à la partie supérieure avec un intervalle isolant entre eux.

32. Noeud de puissance électrique modulaire selon la revendication 31, dans lequel les conducteurs de bus sont dans une orientation contiguë répétée résultant en des colonnes de conducteurs de bus empilés avec des colonnes régulières de bornes pour recevoir des modules (6) à intervalles réguliers le long de la colonne.
